(19) **Europäisches Patentamt European Patent Office Office européen des brevets**

(11) **EP 3 583 413 B1**

(12) **EUROPEAN PATENT SPECIFICATION**

(45) Date of publication and mention
of the grant of the patent:
**02.07.2025 Bulletin 2025/27**

(21) Application number: **18713031.5**

(22) Date of filing: **16.02.2018**

(51) International Patent Classification (IPC):
***G01N 27/447*** *(2006.01)*

(52) Cooperative Patent Classification (CPC):
**G01N 27/44721**

(86) International application number:
**PCT/US2018/000058**

(87) International publication number:
**WO 2018/151843 (23.08.2018 Gazette 2018/34)**

(54) **AUTOMATED QUALITY CONTROL AND SPECTRAL ERROR CORRECTION FOR SAMPLE ANALYSIS INSTRUMENTS**

AUTOMATISIERTE QUALITÄTSKONTROLLE UND SPEKTRALFEHLERKORREKTUR FÜR PROBEANALYSEINSTRUMENTE

CONTRÔLE DE QUALITÉ AUTOMATISÉ ET CORRECTION D'ERREUR SPECTRALE POUR INSTRUMENTS D'ANALYSE D'ÉCHANTILLONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.02.2017 US 201762460700 P**
**24.02.2017 US 201762463551 P**

(43) Date of publication of application:
**25.12.2019 Bulletin 2019/52**

(73) Proprietor: **Life Technologies Corporation**
**Carlsbad, CA 92008 (US)**

(72) Inventors:
- **MAJUMDAR, Nivedita**
**Carlsbad, CA 92008 (US)**
- **GEORGE, Wallace**
**Carlsbad, CA 92008 (US)**
- **MARKS, Jeffrey**
**Carlsbad, CA 92008 (US)**
- **JIANG, Ming**
**Carlsbad, CA 92008 (US)**
- **CHANG, Sylvia**
**Carlsbad, CA 92008 (US)**
- **WOO, David**
**Carlsbad, CA 92008 (US)**

(74) Representative: **Boult Wade Tennant LLP**
**Salisbury Square House**
**8 Salisbury Square**
**London EC4Y 8AP (GB)**

(56) References cited:
EP-A2- 1 898 210          WO-A1-00/23796
US-A1- 2006 070 880      US-A1- 2008 110 756

**Description**

CROSS-REFERENCE TO RELATED APPLICATIONS

This application claims the benefit of U.S. provisional patent application number 62/460,700, filed on February 17, 2017 and U.S. provisional patent application 62/463,551, filed on February 24, 2017.

Exemplary systems for methods related to the various embodiments described in this document include those described in following applications:

- U.S. patent application number 15/124,013, filed on March 7, 2014;
- U.S. patent application number 15/124,129, filed on March 7, 2014;
- U.S. patent application number 15/124,168, filed on March 7, 2014;
- U.S. design patent application number 29/591,445, filed on January 19, 2017;
- U.S. design patent application number 29/591,865, filed on January 24, 2017;
- U.S. design patent application number 29/591,867, filed on January 24, 2017;
- U.S. provisional patent application number 62/463,528 (Thermo Fisher Scientific, Inc. Docket Number LT01213PRO), filed on February 24, 2017;
- U.S. provisional patent application number 62/463,467 (Thermo Fisher Scientific, Inc. Docket Number LT01225PRO), filed on February 24, 2017.

BACKGROUND

This disclosure relates generally to instruments that analyze dye-labeled samples. Existing instruments generally analyze the results of sample runs. However, problems with run conditions that might make the resulting data not reliable are generally not identified, or are identified so late that samples and time are wasted, thereby lengthening the research process.

Such instruments have used a dye matrix to correlate incoming spectral data with the particular dyes usable with the instrument. The dye matrix identifies normalized expected values for each dye usable with the system. Existing instruments typically require that the normal runtime operation of the system, in which samples of interest are processed in the instrument, be supplemented by and/or interrupted to carry out a special calibration process that is typically performed by the end user. For example, such a process might require a special "calibration run" in which known dyes are run through the system and the resulting spectral data is used to calibrate or re-calibrate the dye matrix used by the system.

US 2006/070880 describes methods and apparatus for manipulating separation media in the context of filling one or more capillaries with a separation medium for electrophoresis. A polymer-displacement pump system and method for reciprocating a pump piston in a first direction to draw fresh fluid into a chamber, and reciprocating the pump piston in a second direction to cause the fresh fluid to exit the chamber and fill a single capillary or multi-capillary array. The pump piston movement can be electrically controlled.

EP 1 898 210 describes microfluidic devices, systems, and methods that allow selective transportation of fluids within microfluidic channels of a microfluidic network by applying, controlling, and varying pressures at a plurality of reservoirs. Modeling the microfluidic network as a series of nodes connected together by channel segments and determining the flow resistance characteristics of the channel segments may allow calculation of fluid flows through the channel segments resulting from a given pressure configuration at the reservoirs. To effect a desired flow within a particular channel or series of channels, reservoir pressures may be identified using the network model. Viscometers or other flow sensors may measure flow characteristics within the channels, and the measured flow characteristics can be used to calculate pressures to generate a desired flow. Multi-reservoir pressure modulator and pressure controller systems can optionally be used in conjunction with electrokinetic or other fluid transport mechanisms.

WO 00/23796 describes an automated parallel electrophoresis system including a plurality of capillaries configured to accommodate samples during an electrophoresis run which includes a plurality of phases. The system also includes a control circuit coupled to the capillaries and configured to perform one of monitoring and regulating the capillaries, a display monitor and a computer processor coupled to the control circuit and the display monitor. The computer processor includes an input/output interface configured to communicate with the control circuit and a first computer memory storing a display program which displays a graphical user interface on the display monitor. In addition, a method of monitoring and regulating an electrophoresis run performed on a parallel capillary electrophoresis system which comprises a plurality of capillaries configured to accommodate samples during an electrophoresis run.

US 2008/110756 describes how a dynamic range is extended in an electrophoresis unit and concentration differences among a plurality of samples measured simultaneously are increased. An irradiation time to the samples is adjusted during analysis without changing a sampling time. By shortening the irradiation time, a fluorescence amount of the samples is reduced to cause signal intensity detected by a detector to physically decrease. If the irradiation time is very short (several 100 msec), the irradiation time and fluorescence intensity are in a direct proportional relationship. It is known that, if the irradiation time is reduced to 1/n, the fluorescence intensity, that is, signal intensity to be detected will be 1/n. Thus, for data whose irradiation time is reduced to 1/n during analysis, data obtained by multiplying a substantially measured value by n is used for data analysis as a true value to be originally acquired.

SUMMARY

Research can be conducted more efficiently by automatically detecting potential problems in a sample run or series of sample runs as soon as possible, for example during a sample run or between runs in a series of runs.

The invention comprises: detecting, by a first plurality of sensors, one or more system parameters during polymer loading, but prior to sample loading and detection;detecting, by a second plurality of sensors, one or more system parameters during at least one of sample loading and sample detection; analyzing, by a computer processor, data from the first plurality of sensors and the second plurality of sensors to determine, prior to the end of sample detection, whether to perform an action based on the analysis.

Some embodiments of the present invention provide automated monitoring of parameters that might affect the quality of results from a sample run and then provide information and/or take actions based on measurements of those parameters. In some embodiments, temperature and/or pressure parameters are measured and compared to thresholds to determine whether warning should be provided and/or actions taken. In some embodiments, optical signals are analyzed to determine if warnings should be provided and/or actions taken. In some embodiments, a system data structure is updated based on optical signals or other parameters measured during a run. The updated data structure is then analyzed to determine whether warnings should be provided and/or actions taken.

In some embodiments, pressure parameters including pressures and valve and/or pump positions are measured upon loading sample solution into one or more capillaries of the instrument. In some embodiments, a run is stopped, paused, pressure is increased or decreased, warning signals sent, or one or more various other actions taken if measured pressure parameters indicate run quality might be compromised based on pressure.

In some embodiments, one or more current noise metrics are determined based on current measurements during a sample run. In some embodiments, actions are taken during a sample run if predetermined current noise metrics are exceeded.

That existing calibration methods require a separate runtime operation of an instrument is disruptive to the user and reduces productivity. This can also lead to calibration not being done often enough to ensure optimal results. Embodiments of the present invention provide instruments, computer systems, computer program products, and methods for automatic correction of spectral error during the instrument's normal runtime operation without requiring the user to conduct a special, separate calibration run. In other words, in certain embodiments, an end user does not have to perform a separate manual spectral calibration, making this a calibration-less instrument from an end user's perspective. In other embodiments, the need to perform separate runtime or pre-run calibrations is reduced by the use of in-run calibration or other correction of spectral error.

Various other aspects of the inventive subject matter will become more apparent from the following description, along with the accompanying drawings.

BRIEF DESCRIPTION OF THE DRAWINGS

FIG. 1 illustrates a sample separation and identification instrument in accordance with an embodiment

FIG. 2 illustrates an exemplary method in accordance with an embodiment to carry out runtime correction of spectral error in the instrument of FIG. 1.

FIG. 3 illustrates an exemplary method in accordance with an embodiment to carry out runtime correction of spectral error in the instrument of FIG. 1.

FIG. 4 illustrates data corresponding to an exemplary dye matrix of the instrument of FIG. 1 that can be calibrated or re-calibrated

FIG. 5 illustrates exemplary spectral bin data generated by the instrument of FIG. 1.

FIG. 6 illustrates exemplary dye data obtained by applying an existing dye matrix to spectral bin data.

FIG. 7 illustrates exemplary cross plot data plotting one dye's fluorescence versus another. The data can be used to obtain a crosstalk matrix in implementing the method of FIG. 3.

FIG. 8 illustrates an exemplary method for identifying and removing outliers in cross plot data such as the data illustrated in FIG. 7.

FIG. 9 illustrates an exemplary method for generating an internally estimated dye matrix for use as an initial existing dye matrix in the method of FIG. 3 when an existing dye matrix is not otherwise available.

FIG. 10 illustrates an exemplary method for generating an internally estimated dye matrix for use as an initial existing dye matrix in the method of FIG. 3 when an existing dye matrix is not otherwise available.

FIG. 11 illustrates a method for carrying out an embodiment.

FIG. 12 illustrates a method for carrying out an embodiment

FIG. 13 illustrates a method for carrying out an embodiment

FIG. 14 illustrates a method for carrying out an embodiment

FIG. 15 illustrates a method for carrying out an embodiment.

FIG. 16 illustrates an exemplary computer system configurable by a computer program product to carry out embodiments of the present invention.

While the invention is described with reference to the above drawings, the drawings are intended to be illustrative.

DETAILED DESCRIPTION

The various embodiments now will be described more fully hereinafter with reference to the accompanying drawings, which form a part hereof, and which show, by way of illustration, specific examples of practicing the embodiments. This specification may, however, be embodied in many different forms and should not be construed as limited to the embodiments set forth herein; rather, these embodiments are provided so that this specification will be thorough and complete, and will fully convey the scope of the invention to those skilled in the art. Among other things, this specification may be embodied as methods or devices. Accordingly, any of the various embodiments herein may take the form of an entirely hardware embodiment, an entirely software embodiment or an embodiment combining software and hardware aspects. The following specification is, therefore, not to be taken in a limiting sense.

In following description, embodiments of capillary electrophoresis systems and methods arc utilized to demonstrate various aspects and advantages of embodiments of the present invention. Such embodiments serve as examples but should not be construed as limiting. For example, embodiments of the present invention may be utilized in various applications where various fluorescent tags, dyes, and/or probes for detecting and/or quantify various types of biological samples or molecules of interest. Embodiments of the present invention include, but are not limited to, capillary electrophoresis systems or methods, CE-SDS systems or methods, a polymerase chain reaction (PCR) systems or methods, real-time PCR systems or methods, digital PCR systems or methods, Sanger Sequencing systems or methods, Pyro Sequencing systems or methods, systems or methods configured for sequencing by ligation, sequencing systems or methods such as Next Generation Sequencing (NGS) systems or methods, mass spectrometry systems and methods, flow cytometry systems and methods, gel electrophoresis, and spectrophotometry systems and methods. Some embodiments are particularly well-suited to sample separation systems and methods. However, as can be seen from the preceding list, some embodiments of the invention are applicable to both sample separation systems and methods and other sample analysis systems and methods. Embodiments of the present invention may be incorporated into systems or methods for processing or conduct assays on nucleic acid molecules, DNA molecules, RNA molecules, protein molecules, cellular molecules, sugar molecules, or other biological or organic molecules. PCR systems and methods may include, without limitation, allele-specific PCR, asymmetric PCR, ligation-mediated PCR, multiplex PCR, nested PCR, real-time PCR (qPCR), genome walking, bridge PCR, digital PCR (dPCR), or the like. In various embodiments, processing and detection of one or more types of biological components of interest may include, but is not limited to, DNA sequences (including cell-free DNA), RNA sequences, genes, oligonucleotides, molecules, proteins, biomarkers, cells (e.g., circulating tumor cells), or any other suitable target biomolecule. In various embodiments, biological components may be used in conjunction with one or more methods or systems in applications such as fetal diagnostics, multiplex dPCR, viral detection and quantification standards, genotyping, sequencing validation, mutation detection, detection of genetically modified organisms, rare allele detection, and/or copy number variation. Some embodiments of the automatic spectral calibration techniques described herein do not depend on identifying particular data points being processed as being peaks. Also, some embodiments are not necessarily dependent on the data traces being processed having any expected shape. This enhances application to various contexts.

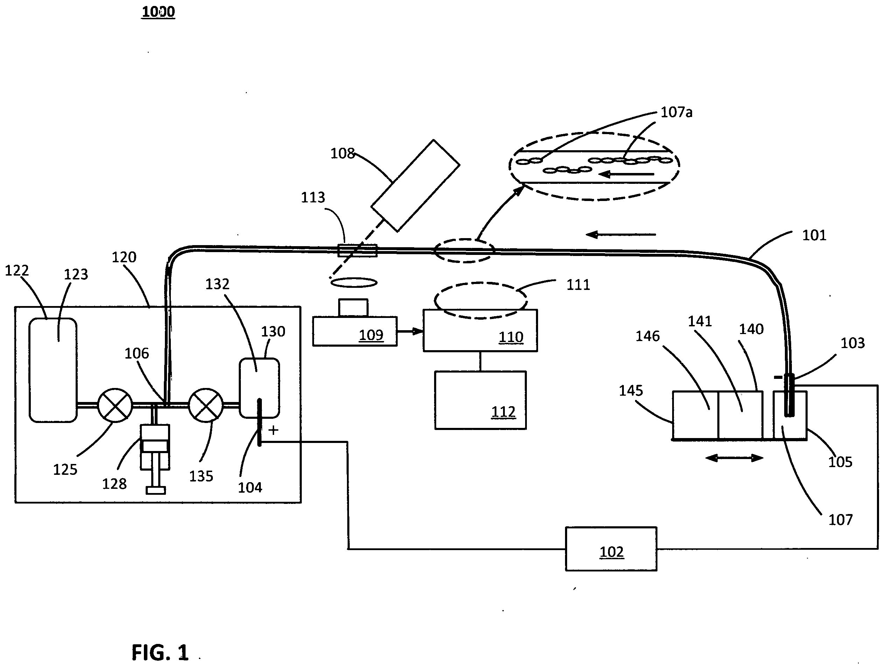

FIG. 1 illustrates a sample separation and identification instrument 1000 in accordance with an embodiment. In the illustrated embodiment, instrument 1000 is a capillary electrophoresis (CE) instrument. However, embodiments of the invention are potentially applicable to other types of sample separation and identification instruments that rely on using a photodetector to identify dyes on dye-labeled samples. The system could include, but not limited to, at least one capillary. Typical configurations include 1, 2, 4, 8, 16, 24, 48, 96 and 384 capillaries. Sample separation could also be performed by other means including using gel electrophoresis and microfluidics such as on a lab-on-a-chip. CE instrument 1000 comprises capillary 101 (and will generally comprise other capillaries not separately shown), voltage supply 102, one or more cathodes 103, one or more anodes 104, sample source container 105, sample destination container 106, illumination source 108, detection system 109, data processing system 110 configured by computer program product 111, and display 112. Radiant source 108 is configured to illuminate an detection zone 113 of at least one capillary 101.

Detection system 136 comprises a detector configured to receive emissions from the optical detection zone 121 of capillaries 101, for example fluorescent emissions produced by fluorescent dyes, probes, or markers attached to the target molecules or molecules of interest. The detector may comprise one or more individual photodetectors including, but not limited to, photodiodes, photomultiplier tubes, bolometers, cryogenic detectors, quantum dots, light emitting diodes (LEDs), semiconductor detectors, HgCdTe detectors, or the like. Additionally or alternatively, the detector may comprise an array sensor including an array of sensors or pixels. The array sensor may comprise one or more of a complementary metal-oxide-semiconductor sensor (CMOS), a charge-coupled device (CCD) sensor, a plurality of photodiodes detectors, a plurality of photomultiplier tubes, or the like. In certain embodiments, detector 138 comprises two or more array sensors. Detection system 136 may further comprise one or more spectral dispersion elements (e.g., prisms or diffractive optical elements), wherein each dispersion element is configured to direct emission light from a different one of capillaries 101 onto a different region of the detector. The spectral dispersion elements may comprise one or more of prisms, diffractive optical elements, holographic optical elements, or the like. The spectral dispersion elements may comprise reflective or transmissive optical elements.

Illumination source 108 may comprise a single source of light comprising, for example, an incandescent lamp, a gas discharge lamp (e.g., Halogen lamp, Xenon lamp, Argon lamp, Krypton lamp, etc.), a light emitting diode (LED), an organic LED (OLED), a laser, or the like. Alternatively, the illumination source 108 may comprise a plurality of individual light sources (e.g., a plurality of LEDs or lasers). Illumination source 108 source may also include one or more excitation filters, such as a high-pass filter, a low-pass filter, or a band-pass filter. For example, the excitation filter may be a colored filter and/or a dichroic filter. Illumination source 108 may comprise a single beam or a plurality of beams that are spatially and/or temporally separated. Illumination source 108 may be characterized by electromagnetic radiation that is primarily within the visible light range, near infrared range, infrared range, and/or ultraviolet range of the electromagnetic spectrum.

Instrument 1000 operates as follows. A sample mixture or solution 107 containing various samples or sample molecules 107a is prepared in or delivered into sample source container 105. At least a portion of sample mixture 107 is subsequently loaded into cathode 103 end of capillary 101, for example using a pump or syringe, or by applying a charge or electric field to capillary 101. Once loaded into the anode end of capillary 101, voltage supply 102 creates a voltage difference between cathode 103 and anode 104. The voltage difference causes negatively charged, dye-labeled samples 107a to move from sample source container 105 to sample destination container 106. Longer and/or less charged dye-labeled samples 107a move at a slower rate than do shorter and/or higher charged dye-labeled samples, thereby creating some separation between samples of varying lengths and charges. As each of samples 107a passes through an excitation beam generated by illumination source 108, a dye on a leading element (a leading element might, e.g., be a nucleotide) of a sample 107a exhibits fluorescence that is detected by detector 109. Detector 109 is coupled to provide signals to data processing system 110 in response to detected fluorescence. In particular, detector 109 passes a signal to processing system 100 corresponding to the intensity of light received at various wavelengths scanned by detector 109. Computer program product 111 configures data processing system 110 to process the received spectral data and may, for example during runtime of CE instrument 1000, calibrate instrument 1000 to correct for spectral error. In certain embodiments, the calibration may be conducted without a user having to stop a sample run to perform user-based calibration of instrument 1000. The correction may be considered automatic and/or the system may be considered to be self-correcting with respect to spectral error. In some embodiments, calibration may be conducted after and/or between regular sample runs.

In certain embodiments, system 1000 comprises a delivery system 120 comprising a polymer reservoir 122 containing a polymer or polymer solution 123, a polymer valve 125, and a pump 128 (e.g., a syringe) configured to receive or draw polymer 123 from polymer reservoir 122 and to pump or load polymer 123 into capillary 101. Delivery system 120 further comprises a buffer reservoir 130 containing a buffer solution 132 and a buffer valve 135. In the illustrated embodiment, buffer reservoir contains the one or more anodes 104. In certain embodiments, all or some of components of delivery system 120 are part of a cassette or cartridge that may further comprise capillary(ies) 101. The cassette or cartridge may also comprise the one or more cathodes 103 (e.g., one cathode 103 for each of a plurality of capillaries 101).

In certain embodiments, system 1000 may be used to perform a method of conducting a capillary electrophoresis assay, experiment, or process. An exemplary such method includes the following steps:

- Locate cathode 103 end of capillary 101 into wash/waste buffer container 140 containing a wash/waste buffer solution 141.
- Close buffer valve 135, open polymer valve 125.
- Aspirate (draw) polymer solution 123 from polymer reservoir 122 into syringe 128.
- Close polymer valve 125 (buffer valve 135 remains closed).
- Dispense (deliver) polymer 123 to capillary 101 using syringe 128.
- Locate cathode 103 end of capillary 101 into sample source container 105.
- Draw at least a portion of sample solution 107 into cathode 103 end of capillary 101 by inducing a current flow from cathode 103 to anode 104 (referred to as electrokinetic injection).
- Locate cathode 103 end of capillary 101 into run buffer container 145 containing a run buffer solution 146.

- Open buffer valve 135 to provide electrical coupling between anode 104 and capillary 101 (polymer valve 125 remains closed).
- Run capillary electrophoresis assay.
- Locate cathode 103 end of capillary 101 into a wash/waste buffer container 140.
- Close buffer valve 135.
- Optionally open polymer valve 125.
- Optionally aspirate (draw) polymer solution 123 from polymer reservoir 122 into syringe 128.
- Optionally close polymer valve 125 if open.
- Clean capillary 101 by dispensing (delivering) polymer 123 to capillary 101 using syringe 128.
- Repeat above steps for new CE assay.

Correcting "spectral error" as referenced herein refers to removing pullup/pull-down error, also known as spectral crosstalk error. Furthermore, spectral error as referenced herein includes either or both of dye-to-dye error within the same capillary and error between dyes in different capillaries. The latter is sometimes referred to "cap-to-cap" or "spatial" error. However, for ease of description, the phrase "spectral error" will be considered broad enough to include such "cap-to-cap" error between different capillaries as well as dye-to-dye error within the same capillary. Spectral error corrected for by various embodiments described herein can be caused by one or more of the sample, the sequence, run conditions (temperature, current, voltage), polymer, other reagents, contamination, acidity, etc. and/or other factors.

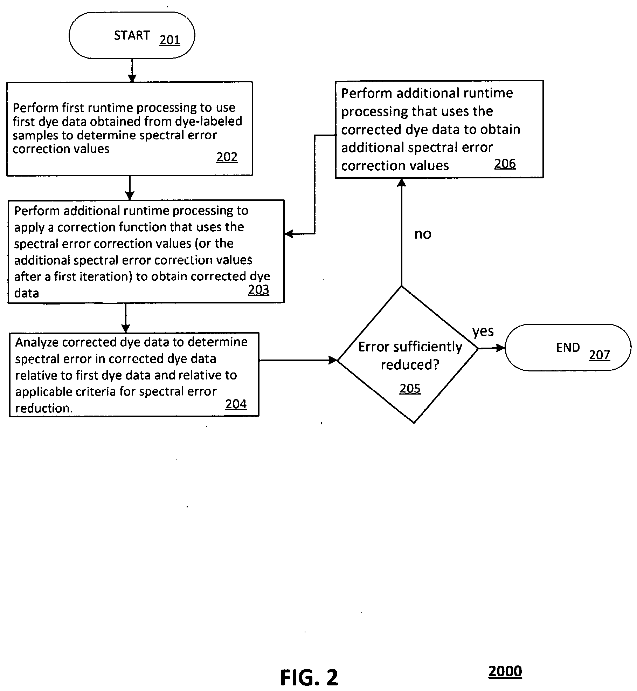

FIG. 2 illustrates an exemplary method 2000 executed by data processing system 110 of instrument 1000 shown in FIG. 1. Method 2000 is compatible with one embodiment of the invention. Method 2000 performs runtime correction of spectral error of instrument 1000 to in data obtained from runtime processing of dye-labeled samples of interest through sample-separation instrument 1000. "Runtime processing" as used herein refers to processing of samples of interest to be analyzed by instrument 1000. This is to be contrasted with separate calibration runs of prior art instruments in which particular calibration dye samples with special dye and peak arrival characteristics are run through the instrument to calibrate or recalibrate a dye matrix in a run that is separate from regular runtime processing of samples of interest to be analyzed. Embodiments correct for spectral error during runtime without the user having to perform a special separate run for calibration purposes.

Method 2000 begins at step 201. Step 202 performs runtime processing to determine spectral error correction values based on spectral data obtained from runtime processing of dye-labeled samples by instrument 1000. "Spectral error correction values" as referenced herein includes either or both directly measured spectral error values and proxies for the spectral error values that have some correlation to the directly measured spectral errors. Step 203 performs additional runtime processing to apply a correction function using the spectral error correction values to obtain corrected spectral data which may or may not reflect sufficient removal of spectral error. Step 204 analyzes the corrected spectral data to determine spectral error of corrected spectral data relative to first spectral data and/or relative to applicable criteria for spectral error reduction. Step 205 determines whether spectral error has been sufficiently reduced in the corrected spectral data. If yes, then method 2000 ends at step 207. If no, then step 206 performs additional runtime processing using the corrected spectral data to obtain additional spectral error correction values and the process returns to step 203 to perform further processing to apply a correction function, this time using the additional spectral error correction values obtained in step 206 to obtain additional corrected spectral data. In some embodiments, steps such as steps 206, 203, and 204 can continue iterating until either a maximum number of desired iterations is reached or until the spectral error has been reduced to a specified level. In some embodiments, it may also be required that an uncertainty level with respect to the spectral error reduction be below a certain threshold (this threshold might vary depending on an absolute level of measured error in the spectral data obtained after a number of iterations).

Various specific methods may be employed to implement the processing of method 2000. One embodiment takes a (positive or negative) fraction of one dye ("primary dye") and adds it to another dye ("secondary dye") until the spectral error or an appropriate proxy for the spectral error is minimized. Spectral error or an appropriate proxy for the spectral error is minimized for various dye trace permutations. This minimizing procedure can be iterative for each group of dye trace permutations until the global spectral error or an appropriate proxy for the spectral error stops being minimized. This iterative process would result in dye traces with minimized spectral error.

Appropriate proxies for spectral error can be cross-correlations between the dyes in the dye data, any spectral error values that have some correlation to the directly measured spectral errors, cross-"energy" (e.g. the product of one dye trace with the other), scaled cross-"energy" (e.g. the product of one appropriately scaled dye trace with the other), etc. Some scaling factors for the dye traces used to form the scaled cross-energy can be the maximum value within each trace, a power (greater than one or a fractional power such as 0.5) of the maximum value within each trace, the standard deviation within the trace, etc. Such a cross-energy or scaled cross-energy will tend to minimize as the spectral error tends to zero, especially when the amount of overlapping between the peaks (associated with each dye-labeled sample, e.g., a dye-labeled DNA fragment) between the dye traces is small.

The utilized methods of directly measuring/estimating the spectral error or which act as proxies for spectral error are preferably substantially insensitive to the effects of overlapping in dye trace peaks. In this approach, appropriate algorithmic (linear or non-linear, constrained or unconstrained, and/or local or global) optimization techniques, and/or deep-learning or more general machine-learning techniques can be used to determine the positive or negative fraction for each permutation of primary and secondary dyes. In this approach, the spectral errors are directly removed from dye traces without explicitly using any further dye matrices.

Another approach to removing spectral error involves using optimization techniques to modify the elements of the instrument's dye matrix (DM) so that the spectral error or an appropriate proxy for the spectral error is minimized. The dye matrix is a matrix with the normalized dye spectra of each dye as its rows and the spectral bin number as its columns. Each row is typically normalized to have a maximum value of unity.

The following procedure can be used in some embodiments to obtain dye data (dyeData) from spectral scan data (scanData) given a dye matrix (DM) (using * to indicate a matrix multiplication):

$$dyeData = scanData * inv(DM)$$

where:

dyeData = the dye data, matrix dimensions being numScans x numDyes,
scanData = the spectral bin data, matrix dimensions being numScans x numBins,
DM = the dye matrix, matrix dimensions being numDyes x numBins,
inv(DM) refers to the matrix inverse of the dye matrix, dimensions being numBins x numDyes, (note that, as used herein, the inverse of the dye matrix could mean the inverse or pseudo inverse)

and

numScans = the number of scans,
numDyes = the number of dyes,
numBins = the number of spectral bins.

In this approach a default dye matrix or a dye matrix from a previous dye matrix calibration/correction provides an initial starting dye matrix. This default dye matrix or a dye matrix from a previous dye matrix calibration/correction is called an Estimated Dye Matrix (EDM). The elements of the dye matrix are then adjusted using an optimization process so as to minimize the spectral error or an appropriate proxy for the spectral error. This process would preferably be applied using a proxy for the spectral error (i.e., any value reasonably correlated with spectral error) since calculating the proxy is usually less expensive than directly approximating the spectral error. An improved version involves first performing singular value decomposition (svd) on the dye matrix to decompose it into the product of (numDyes x numDycs) left eigenvector, a (numDyes x numBins) diagonal matrix, and a (numBins x numBins) right eigenvector. Since typically numDyes < numBins, only the first numDyes x numDyes sub-matrix in the diagonal matrix is meaningful. As a result, the expense of the optimization process can be reduced by just modifying the elements of this numDyes x numDyes sub-matrix. This process would be iterative so that the svd is re-performed at different stages in the iterative optimization process. It is preferable to use a constrained optimization process since the elements of the dye matrix are constrained to be between one and zero.

Embodiments of the invention are described herein primarily in the context of correcting for spectral error (i.e., dye-to-dye within a capillary or cap-to-cap/spatial error) in dye data. However, additional errors corresponding to higher order derivatives can also potentially be corrected. Spectral errors in the dye are a positive or negative fractional multiple of the main dye peak associated with a dye-labeled sample of interest (e.g., a DNA fragment). This can be thought of as a zeroth order error.

First order derivative (first derivative) errors - i.e., First Order Spectral Errors or Sinusoidally Shaped Spectral Errors, SSSE - result from Doppler spectral shifts occurring because a dye-labeled DNA fragment is passing an optical observation point at a finite velocity. This creates spectral shifts in the dye spectrum recorded by the optical system. This leads to spectral errors in the dye traces outside the main dye trace that are approximately the first-order order derivative (first derivative) of the peak associated with the dye-labeled DNA fragment. There may be other sources (optical, chemistry, electrical, mechanical/vibration, etc.) which result in other first order spectral errors. Please note that this error has a minima/zero when the main dye peak is at a max, and side maxima and minima of opposite signs that occur on either side of the minima.

Second order derivative (second derivative) errors - which result from a coupled interaction of first order derivative (first derivative) sources of error or, more generally, as a Taylor series error correction term to the first order error sources. Please note that this error has an absolute maximum when the main dye peak is at a max, and side maxima or minima of the same sign that occur on either side of the maxima. The fact that this error has an absolute maximum when the main dye peak is at a maximum (same as the zeroth order errors) may result in difficulty in accounting for the zeroth order errors if the second order errors are significant.

Third order and higher order derivative errors should typically be small relative to the noise in a real-world system. However, one skilled in the art would recognize that this approach can be generalized to higher order errors if necessary.

In some embodiments, the correction function applied in step 203 is modified, if needed, based on the scan number to reflect slight changes in the spectra for dye-labeled samples that are part of longer fragments (e.g., DNA fragments). Generally, samples that are part of longer fragments arrive later in a sample run, and are therefore associated with later scan numbers. Therefore, the same dye-labeled DNA letter might have a slightly different spectra if arriving later in the run (part of a longer fragment) versus earlier (part of a shorter fragment). One example of varying the correction function to account for this effect is to apply a variation to the dye-matrix based on the scan number. This variation is generally first order linear (and probably at most has second order terms), so we can include a first-order (or second order) linear model of this spectral variation when finding the dye matrix. As a result, in this adaptive dye matrix correction case, the dye matrix can now be written as:

$$DM(scanNum) = DM0 + DM1*scanNumber$$

or as:

$$DM(scanNum) = DM0 + DM1*scanNumber + DM2*scanNumber^2$$

where:

DM(scanNumber) is the dye matrix at the scan number scanNumber
DM0 is the constant part of the dye matrix (similar to our previous assumption)
DM1 is the matrix representing the first-order linear variation terms of the dye
matrix based on scan number (obtained from an appropriate linear regression), and, if needed:
DM2 is the matrix representing the second-order linear variation terms of the dye matrix based on scan number (obtained from an appropriate linear regression).

One skilled in the art would recognize that this approach can be generalized to higher order errors if such higher order errors prove to be significant. In the cases where the dye spectrum is unchanging, all of the elements in DM1 and DM2 become identically zero. In general, the maximum values in DM1 and DM2 are small relative to 1. They can be positive or negative.

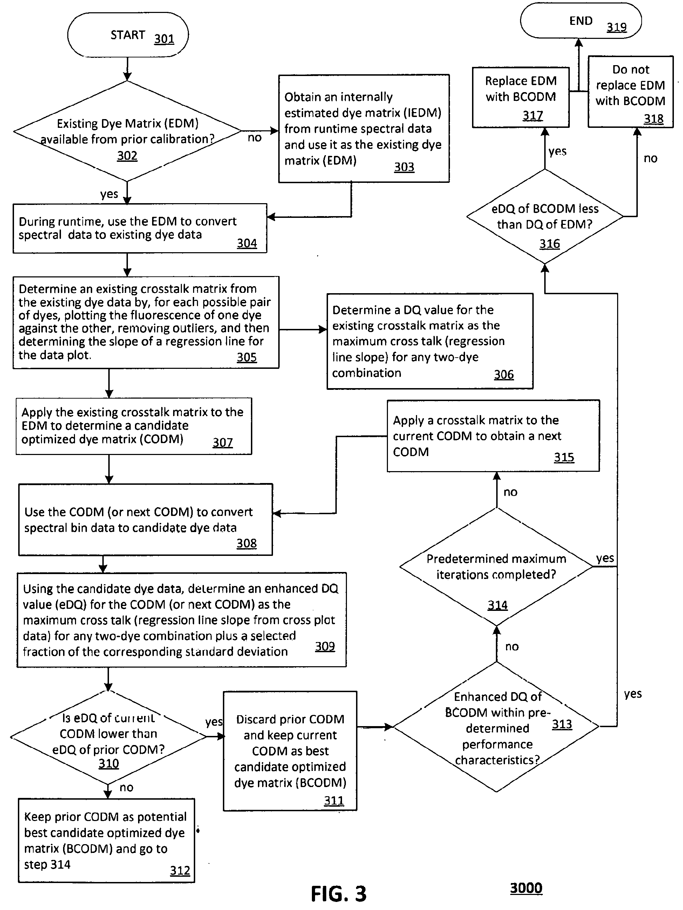

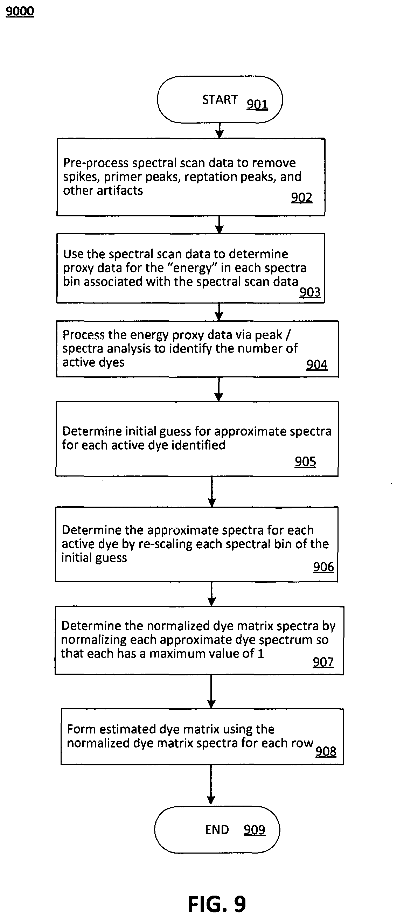

FIG. 3 illustrates an exemplary method 3000 executed by data processing system 110 of instrument 1000 shown in FIG. 1 in accordance with a particular embodiment compatible with the present invention. Method 3000 illustrates one particular way of implementing method 2000 of FIG. 2, but represents just one of many possible specific implementations of the method illustrated in FIG. 2. Method 3000 relies on calibrating and/or re-calibrating the instrument's dye matrix during runtime to reduce spectral error in dye data generated by the instrument's dye matrix. Method 3000 begins at step 301. Step 302 determines whether an existing dye matrix ("EDM") is available from a prior calibration of instrument 1000. If yes, then the method proceeds to step 304. If no, then step 303 determines an internally estimated dye matrix ("IEDM") to be used as an EDM. Further details showing embodiments for producing an IEDM when no dye matrix from a prior calibration is available are shown and described below in the context of FIGS. 9-10.

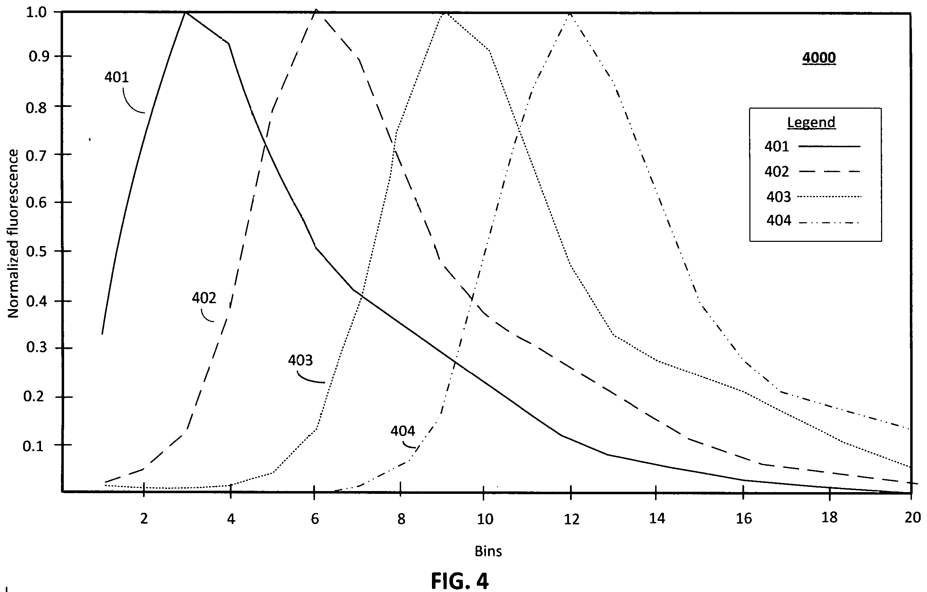

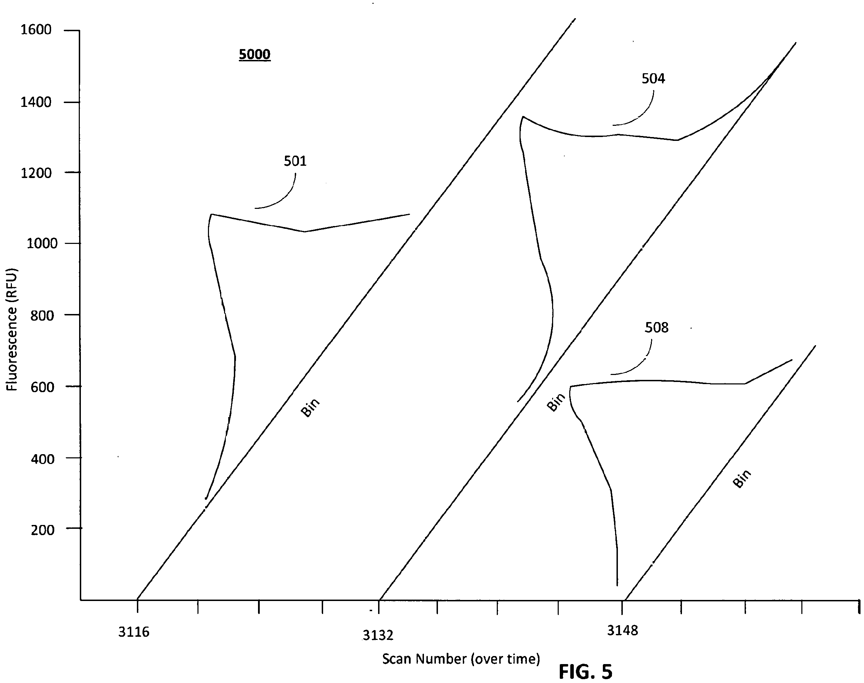

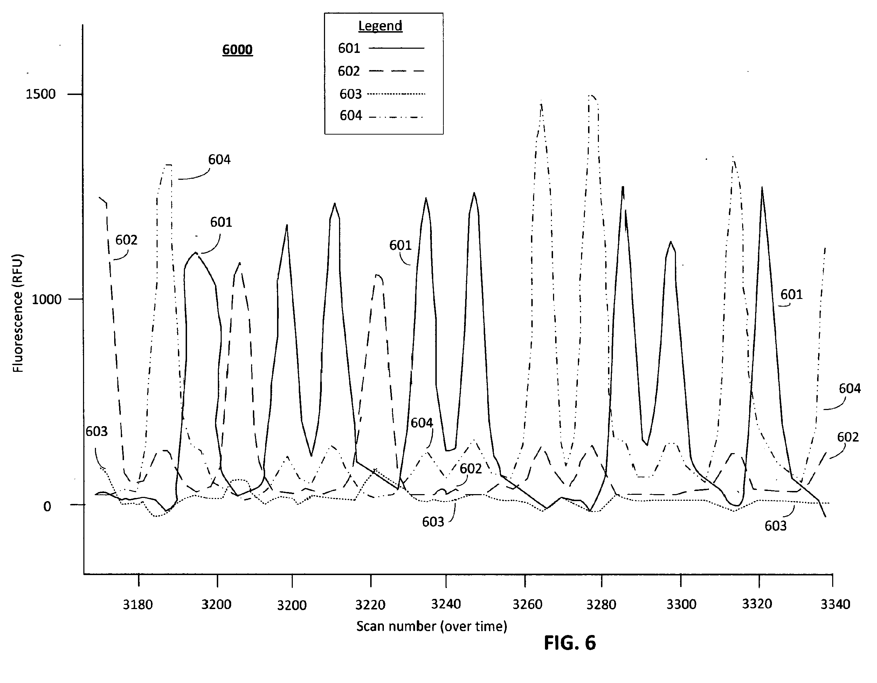

Step 304, during runtime operation of the instrument (i.e., when processing dye-labeled samples of interest for analysis), uses the EDM to convert spectral bin data to existing dye data. As will be explained in further detail below, exemplary data corresponding to a 4-dye EDM is illustrated in FIG. 4, exemplary spectral bin data is illustrated in FIG. 5, and exemplary existing dye data is illustrated in FIG. 6. Step 304 multiplies spectral bin data by the inverse of the EDM to obtain existing dye data.

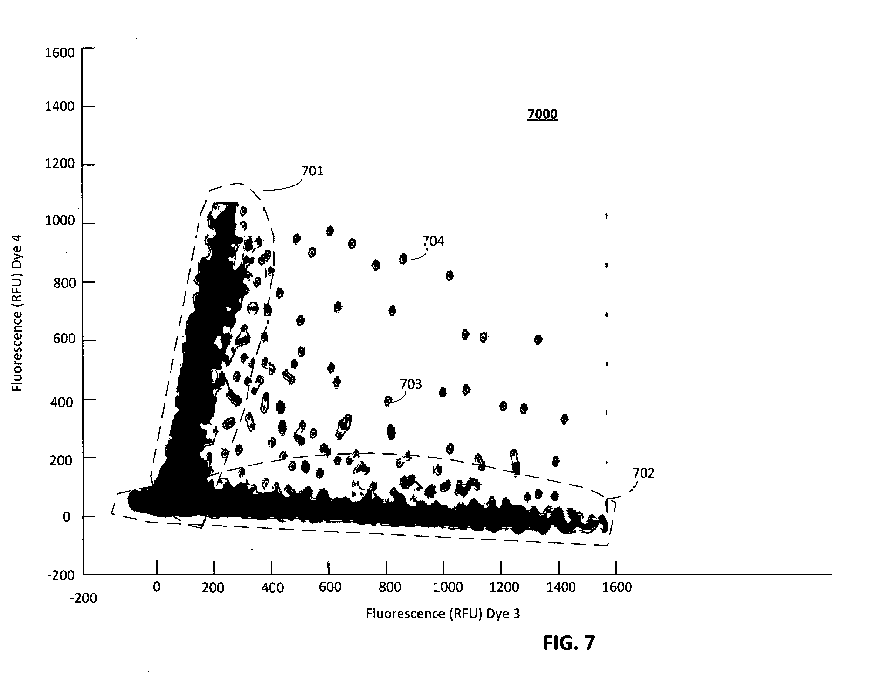

Step 305 determines an existing crosstalk matrix from the existing dye data determined in step 304. The existing crosstalk matrix includes values corresponding to the relationship between intensity measurements of each two-dye combination. In one embodiment, these values are obtained by determining the slope of a regression line fitting data plotting the intensity of one dye versus intensity of another dye, as will be further explained in the context of the cross plot illustrated FIG. 7. In 4-dye data, a crosstalk matrix has 12 regression values, i.e., one for each possible ordered combination of two dyes. Each regression value (slope of the regression line) has a corresponding standard deviation, which measures how tightly or loosely the cross-plot data for the two relevant dye fits the regression line. In a preferred embodiment, the final regression values (used for determining a cross plot matrix) and the corresponding standard deviations (used for evaluating DQ as described below) are determined after removing outliers from the cross-plot data.

Step 306 determines a deconvolution quality (DQ) value for the existing crosstalk matrix. In this example, DQ is determined to be the maximum crosstalk value (regression line slope) between any two dyes determined in step 305.

Step 307 uses the existing crosstalk matrix to determine a candidate optimized dye matrix (CODM) by adding the identity matrix to the existing crosstalk matrix (which has zero diagonal values) and then multiplying the result by the EDM. Step 308 then converts spectral bin data to candidate dye data using the CODM.

Step 309 determines an enhanced DQ value ("eDQ") for the CODM as the maximum value, for any two-dye combination, given by the sum of (1) crosstalk as determined by a slope of a regression line of the relevant cross-plot data plus (2) a specified fraction of the associated standard deviation of the cross-plot data. Thus, in one embodiment, step 309 determines the regression line slope and standard deviation for each possible two-dye cross plot, calculates a candidate eDQ value for each two-dye ordered pair by multiplying the regression line slope by a fraction of the associated standard deviation, and then selects the highest candidate eDQ as the eDQ for the CODM. In a preferred embodiment, the specified fraction by which the associated standard deviation is multiplied is on the order of about 0.015. In alternative embodiments, other specified fractions can be used. As with step 305, step 309 preferably removes outliers from the relevant cross-plot prior to calculating the corresponding regression line and standard deviation.

Step 310 determines whether the eDQ of the current CODM is lower than the eDQ of the prior iteration's eDQ. If no, then the prior CODM is kept as a potential best candidate optimized dye matrix ("BCODM") and the method proceeds to step 314. If the result of step 310 is yes, then step 311 discards the prior iteration's CODM and keeps the current CODM as the current potential BCODM. Step 313 then determines whether the enhanced DQ of BCODM is within a pre-determined performance characteristic. In other words, step 313 determines whether the maximum crosstalk is at or below a specified value with a sufficient degree of certainty. If the result of step 313 is no, then step 314 determines whether a predetermined maximum number of iterations is completed.

If the result of either step 313 or step 314 is yes, then the method proceeds to step 316. Step 316 determines whether the eDQ of the current BCODM is less than the DQ of the EDM. If the result of step 316 is yes, then step 317 replaces the EDM with the current BCODM and the current BCODM becomes the new EDM to be used for converting spectral data obtained from dye-labeled samples of interest to dye data. If the result of step 316 is no, then step 318 does not replace the current EDM with the current BCODM and the system continues to use the same EDM to convert spectral data obtained from processing dye-labeled samples of interest to dye data. After step 317 or 318 is executed, the method ends at step 319.

Those skilled in the art will appreciate that comparing the above-defined eDQ value of the BCODM to the DQ of the EDM biases the system toward keeping the current EDM. The BCODM is only used to replace the current EDM if the performance of the BCODM is better than the EDM with a sufficient degree of certainty as represented by use of the relevant standard deviation in calculating the eDQ metric. However, in alternative embodiments, a comparison that has less or no bias towards keeping the current EDM might be used. Moreover, in alternative embodiments, a DQ value for dye data obtained using the EDM might be compared to a DQ value for dye data obtained using the BCODM without taking into account standard error measurements. However, it in a preferred embodiment, an error metric associated with a performance value such as a DQ value is utilized to determine whether to replace the EDM.

If the result of step 314 is no, then the method proceeds to step 315. Step 315 applies a crosstalk matrix to the current CODM to obtain a next CODM and the method executes an iterative portion by returning to step 308 to calculate an eDQ for the next CODM (which then becomes the new current CODM for the current iteration). In one embodiment, the crosstalk matrix applied to the current CODM in step 315 is a crosstalk matrix obtained from analyzing dye data generated by applying the current (most recent) CODM to spectral data generated from the instrument's photodetector. In this embodiment, the current CODM is used even if the prior CODM was selected as the potential BCODM in steps 310 and 312. However, in alternative embodiments, different crosstalk matrices can be used and applied to different dye matrices to obtain a next CODM in step 315. To cite but one example, a crosstalk matrix could be a modified version of a crosstalk matrix used on a previous or current iteration. It could be modified, for example, by introducing noise, e.g., jitter-induced noise, to the data from which the spectral crosstalk values are generated.

FIG. 4 illustrates data 4000 corresponding to an exemplary existing dye matrix. Data 4000 plots the normalized fluorescence (vertical axis) versus 20 different spectral bins for four different dyes. Plot line 401 corresponds to data for a first dye (purple dye), plot line 402 corresponds to data for a second dye (green dye), plot line 403 corresponds to data for a third dye (yellow dye), and plot line 404 corresponds to data for a fourth dye (red dye). Plot lines 401, 402, 403, and 404 are shown as continuous for ease of illustration only. In fact, the data itself is discrete, with each dye having 20 twenty normalized fluorescence values (one for each bin), and the lines shown connect those data points. The existing dye matrix represented by data 4000 is used by instrument 1000 of FIG. 1 to identify which dyes are present in spectral bin data generated from several scans across the light spectrum in which photodetector 109 of FIG. 1 measures fluorescence across the light spectrum over time.

FIG. 5 illustrates spectral bin data 5000. Data 5000 includes several plots for different scans by instrument 1000 of FIG. 1. Plot 501 represents data from scan number 3116. Plot 504 represents data from scan number 3132, and plot 508 represents data from scan number 3148. Those skilled in the art will understand that these and other data plots shown herein are merely illustrative and do not necessarily correspond to actual data. Plot lines for data 5000 plot fluorescence (vertical axis, measured in relative fluorescence units-RFUs) for each of 20 spectral bins (discrete data shown by continuous lines for ease of illustration only). Plot lines from three different scans are shown in FIG. 5, but those skilled in the art will understand that spectral bin data such as data 5000 would generally include data from many more scans than are shown in the drawing.

FIG. 6 shows existing dye data 6000. Dye data 6000 is represented by four trace (plot) lines, one for each dye including trace 601 (purple dye), trace 602 (green dye), trace 603 (yellow dye), and trace 604 (red dye). Again, the traces show continuous lines for ease of illustration only; the underlying data comprises discrete data points (four RFU values for each scan number, i.e., a fluorescence value for each dye). Dye data such as dye data 6000 is obtained from spectral bin data by multiplying the spectral bin data by the inverse of the dye matrix. Dye data therefore associates spectral data with particular dyes.

The traces in data 6000 show some pull-up and pull-down effects resulting from spectral crosstalk. For example, the red dye signal associated with trace 604 appears to be associated with some "pull-up" of the green dye signal associated with trace 602. In some embodiments of the invention, spectral crosstalk can be analyzed using analysis of such "peak under peak" data. For example, the amplitude of a clearly smaller peak under a larger peak can be correlated with the amount of spectral error in the trace with the larger peak. However, other embodiments of the present invention recognize that spectral crosstalk can be accounted for more thoroughly through regression analysis of cross plot data. Regression analysis has the benefit of using more of the available data than peak analysis does.

FIG. 7 shows cross plot data 7000 that can be used for determining crosstalk values for one dye relative to another. Specifically, data 7000 plots the fluorescence of a first dye (labeled "dye 3" in the drawing, simply for identification purposes), shown on the horizontal axis, versus the fluorescence of a second dye (labeled dye 4) shown on the vertical axis. Cross plot data 7000 includes data group 701 that shows a significant "pull-up" effect of dye 4 on dye 3 (i.e., as dye 4's fluorescence increases, so does that of dye 3). Cross plot data 7000 also includes data group 702 that shows a somewhat milder "pull-down" effect of dye 3 on dye 4 (i.e., as dye 3's fluorescence increases, dye 4's fluorescence slightly decreases).

In embodiments of the invention, cross plot data sets such as data 7000 are used to determine regression lines and corresponding standard deviations for the data plotting the effect of one dye's fluorescence relative to another's. Correlation between the fluorescence of two dyes, which can be identified through regression analysis of cross plot data such as data 7000, can indicate spectral crosstalk and is thus a reasonable proxy for spectral error. Regression lines and standard deviations are determined for cross plot data sets such as data 7000 for each ordered combination of two dyes in the dye data. In the context of 4-dye data, there are 12 unique ordered two-dye combinations. The 12 slopes of the resulting regression lines provide the values for an existing (or candidate) crosstalk matrix such as, for example, that produced by step 305 of FIG. 3. The corresponding standard deviation from each regression line provides a measure of the standard error in the determined crosstalk number.

Cross plot data 7000 includes data points such as data point 704 that are likely "outliers," meaning that they are sufficiently anomalous to be removed prior to determining a final regression line and corresponding slope and corresponding standard deviation. Depending on the data characteristics, removing outliers, or reducing their weight relative to non-outliers, can improve performance by providing more useful regression values for the crosstalk matrix and providing a more useful standard error value for evaluating DQ values. This allows for improved candidate optimized dye matrices and better determination of when to update the existing dye matrix with a candidate optimized dye matrix. Therefore, in some embodiments, a cross plot's outliers are removed before a final regression line and corresponding slope (and corresponding standard deviation) are determined for use in measuring crosstalk.

Some data points, for example data point 703, are borderline outliers. Whether they are identified as such will depend on the method used for outlier identifications and/or parameter selections made when using those methods.

Many known methods exist for identifying outliers. One known method is amplitude binning. In some embodiments, the edges in the amplitude cross-plots of the secondary dye trace vs primary dye trace are identified by employing amplitude binning. The amplitudes of the primary and secondary dye traces are sorted with respect to the primary dye trace. For each pair of primary and secondary dye trace scans this creates a two column set of data sorted with respect to the primary amplitude. The primary and secondary dye scan values where the primary amplitude is too small (i.e. where the primary values are less than some fraction of the primary's peak amplitude) are eliminated from the set. In one embodiment, a preferred value for this fraction is about 12%. The remaining set of primary and secondary dye scan values should be relatively free of noise in the primary signal. This remaining amplitude sorted set of values is referenced below as the primary and secondary dye scan processing set.

The primary and secondary dye scan processing set is then amplitude binned into amplitude ranges based on the primary amplitude values so that on average a certain number of dye scan values in each bin. In some embodiments, this number is typically between 1 to 8. The net effect of this binning is that there would be many bins with zero scan values and other bins with many scan values. For each bin where there are scan values, the lowest secondary ("edge") value is chosen to represent the secondary value for that bin. The primary value associated with this lowest secondary value is used to represent the primary value for that bin. These chosen "edge" values are used to create a new set of pairs of primary and secondary values that will be used to perform a linear regression to get the slope of the "edges" in the amplitude cross-plots of the secondary dye trace vs primary dye trace. This slope is fractional spectral crosstalk.

The main function of this amplitude binning is to filter out many outlier values typically resulting from overlapping. In each amplitude bin, the minimum secondary amplitude is associated with the positive or negative crosstalk, since overlapping adds arrival values to spectral values that are affected by crosstalk. Thus, the amplitude binning tends to eliminate outliers due to true secondary arrival values that overlap with the spectral crosstalk from the primary peaks into the secondary traces.

Please note that this binning can introduce a small statistical bias in the value of calculated slope. In a preferred embodiment, this bias is corrected for prior to reporting the crosstalk.

Another class of known techniques are known generally as robust outlier filtering and are conducted during regression analysis. For example, some known robust outlier filtering methods are described in the following references: "A comparison of Preliminary Estimators for Robust Regression," A. C. Harvey, J. OF THE AMERICAN STATISTICAL ASSOCIATION, Vol. 72, 1977 Issue 360a, pp. 910-913; and "Fast robust regression algorithms for problems with Toeplitz structure," Nicola Mastronardia, Dianne P. O'Leary, in COMPUTATIONAL STATISTICS & DATA ANALYSIS 52 (2007) 1119-1131. These robust outlier filtering techniques generally involve (1) calculating a first regression line based on the data; (2) weighting each data point with "regression weights" based on the point's distance from the first regression line (where points on or very near the line have a weight of 1 and points far from the line would have a fractional weight less than 1); and (3) using the regression weights in predicting a "y" value for a given "x" value (or vice a versa). Robust outlier identification can involve multiple iterations. Also, the weights can be binary. For example, in Talwar regression (described in Mastronardia and O'Leary referenced above) the weight is 1 or 0 based on a distance threshold. Typical known robust outlier methods have a recommended default value for the distance parameter that is used to identify outliers.

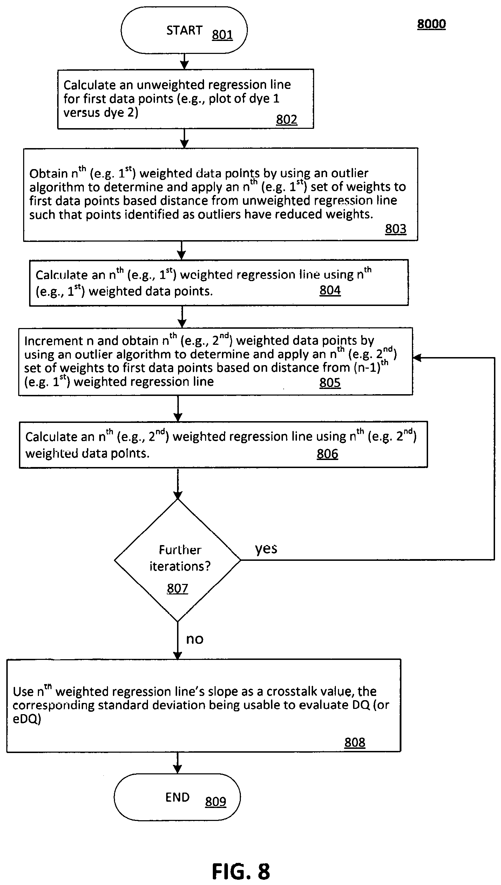

In some embodiments of the present invention, outliers are identified using only amplitude binning techniques. In some embodiments of the invention, outliers are identified using known robust outlier filtering methods. In some embodiments, the known method is the Talwar method. In some embodiments, a combination of amplitude binning and a known robust outlier filtering method is used. However, one embodiment uses a combination of outlier removal techniques including amplitude binning and a modified robust outlier detection and filtering method that is not previously known in the art. This inventive technique is referred to herein as adaptive robust outlier identification and filtering. Adaptive robust identification and filtering is further described below in the context of FIG. 8. In one embodiment, amplitude binning is applied to the data first, then adaptive robust identification and filtering as further described below is applied to the data resulting after application of amplitude binning. In another embodiment, adaptive robust identification and filtering is applied without first using amplitude binning.

FIG. 8 illustrates a preferred method 8000 for outlier filtering referenced herein as adaptive robust outlier identification and filtering. Method 8000 starts at step 801. Step 802 calculates an unweighted regression line using data points in a data plot of one dye's fluorescence versus another's ("first data points"). Step 803 obtains $n^{th}$ weighted data points (for this step, n=1, so this is the "first" set of weighted data points) by using an outlier algorithm to determine and apply an $n^{th}$ set of weights (for this step, it is a "first" set of weights) to the first data points based on their distances from the unweighted regression line.

Step 804 calculates an $n^{th}$ (in this case, first) weighted regression line using the $n^{th}$ (in this case, first) weighted data points. Step 805 increments n (on first iteration, n incremented from 1 to 2, but n grows higher on subsequent iterations) and obtains an $n^{th}$ (e.g., $2^{nd}$ on first iteration) set of weighted data points by using an outlier algorithm to determine an $n^{th}$ set of weights and apply them to the first data points. The weights are determined based on a distance from the $(n-1)^{th}$ (e.g., on the first iteration of step 805, the $1^{st}$) weighted regression line.

Step 806 determines an $n^{th}$ (e.g., on the first iteration, a $2^{nd}$) weighted regression line using the $n^{th}$ set of weighted data points. Step 807 determines whether further iterations are indicated. If the result of 807 is yes, then processing returns to step 805 and n is incremented again (e.g., on the second iteration, n is incremented from 2 to 3).

If the result of step 807 is no, then step 808 uses the current regression line's slope as a crosstalk value. The corresponding standard deviation can be used to evaluate the reliability of a DQ value for a crosstalk matrix. One way of using it could be, for example, to determine the eDQ value referenced above in the context of FIG. 3. Method 8000 ends at step 809.

Various known outlier algorithms or other outlier algorithms can be used as an "outlier algorithm" referenced in steps 803 or 805 of FIG. 8. Outlier algorithms typically have a setting that can be adjusted to identify outliers and/or reduce weights on potential outliers more or less aggressively. In other words, a first setting might "aggressively" identify outliers by requiring a data point to have a smaller distance from a regression line before it is identified as an outlier and/or its weight is otherwise reduced. On the other hand, a second setting might identifier outliers / reduce weights less aggressively by requiring a data point's distance from the regression line be greater before it is characterized as an outlier and/or its weight is reduced. While some outlier algorithms (e.g., as discussed above) identify outliers and assign correspondingly reduced, but non-zero weights, the Talwar method referenced above can be viewed as a more particular case in which a data point identified as an outlier has its weight effectively set to "zero," effectively removing an identified outlier point entirely from the data set.

In a preferred embodiment of method 8000 of FIG. 8, a first setting of an outlier algorithm is used in step 803 and a different, less aggressive setting is used in either the first iteration of step 805 or in a later iteration of step 805. However, in some embodiments of method 8000, the same settings are used throughout or the aggressiveness of the setting in identifying outliers does not necessarily start high and then decrease for later iterations. In some embodiments, the same outlier algorithm is used at step 803 and at all iterations of step 805. However, in other embodiments, different outlier algorithms are used for different iterations.

FIG. 9 illustrates a method 9000 for obtaining an internally estimated dye matrix to be used as an initial existing dye matrix as described in the context of FIG. 3 step 303 when an existing dye matrix is not otherwise available from a prior calibration.

Method 9000 begins at step 901. Step 902 pre-processes spectral scan data to remove spikes, primer peaks, reptation peaks, and/or other artifacts as needed. Step 903 uses the pre-processed spectral data to determine proxy data for the "energy" in each spectra bin associated with the spectral scan data. In this context, appropriate proxy data are values that are reasonably correlated with the intensity data for each spectra. In some embodiments, the values are equal to the intensity, but in other embodiments, the values are merely correlated with intensity data. One example of proxy data for spectral energy is obtained by multiplying the transpose of the spectral data (or appropriately mean-shifted or median-shifted spectral data) with the spectral data (or appropriately mean-shifted or median-shifted spectral data).

Step 904 processes the energy proxy data to determine the apparent number of active dyes. This can be done by determining spectral bins associated with peaks (maxima) in the spectral energy proxy or with negative peaks (minima) in the second derivative of the spectral energy proxy. The number of significant maxima or minima (when working with the second derivative), as appropriate, is identified as the number of active dyes. Significant maxima or minima (when working with the second derivative) are those that are larger than a small threshold fraction (typically about 0.001 to 0.01) of the maximum peak or the maximum negative peak (when working with the second derivative).

Step 905 determines an initial guess at the approximate spectra for each active dye identified in step 904. This is done by identifying the spectral bins associated with peaks (maxima) in the spectral energy proxy or with negative peaks (minima) in the second-derivative of the spectral energy proxy. The spectral energy proxy values associated with each of these identified bins are taken to be the initial guess at the approximate spectra for each dye.

Step 906 re-scales each spectral bin of the initial guess to determine the approximate spectra for each dye. Rescaling factors can be a power of the maximum energy in each spectral bin or the energy on a diagonal of the energy proxy matrix. The power used is typically 1. But other values can be used as appropriate.

Step 907 determines the normalized dye matrix spectra by normalizing each approximate dye spectrum so that each has a maximum value of 1. This is done by dividing each approximate dye spectrum by its maximum value (e.g., dividing an intensity value or other energy proxy value by the peak intensity associated with that dye).

Step 908 takes the normalized spectra from each row of the matrix determined in step 907 to form the estimated dye matrix. Method 9000 ends at step 909.

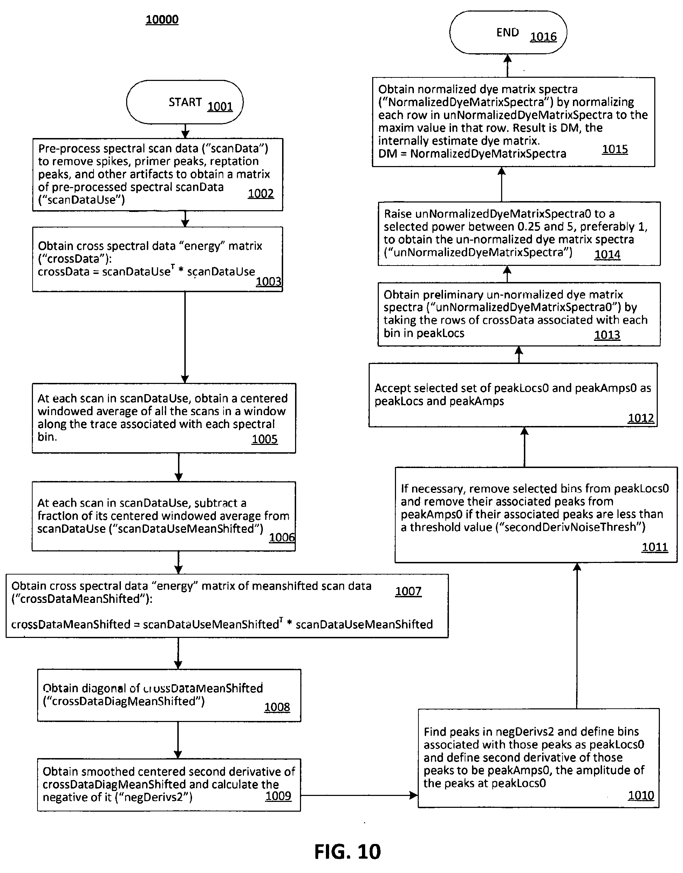

FIG. 10 illustrates a more detailed method 10000 for obtaining an internally estimated dye matrix to be used as an initial existing dye matrix as described in the context of step 303 of FIG. 3 when an existing dye matrix is not otherwise available from a prior calibration. Method 10000 illustrates one particular way of implementing method 9000 of FIG. 9, but represents just one of many possible specific implementations of the method illustrated in FIG. 9.

For Method 10000, the following definitions apply: "scanData" is what is referred to in FIG. 3 as spectral bin data and corresponds to a matrix of size numScans x numBins where numScans is the number of scans and numBins is the number of spectral bins that the input data has been spectrally discretized into. This spectral data will ultimately be converted into dye data (dyeData) using a dye matrix (DM) by the equation:

dyeData = scanData*inv(DM) (where "*" indicates multiplication of the matrices). Alternative variations of this equation include:

dyeData = k*scanData*inv(DM), where k is a constant multiple,

dyeData = $D_K$*scanData*inv(DM), where $D_K$ is a diagonal matrix with (different dye-balancing) constant multiples, and other similar schemes for dye balancing and

biasing of the dye levels.

Step 1002 pre-processes/cleans scanData so that it doesn't contain any spikes, primer peaks, reptation peaks, and other similar potential processing artifacts using standard signal processing techniques. The pre-processed scan data is referred to as "scanDataUse."

Step 1003 obtains the cross spectral "energy" data matrix (crossData) defined as:

$$crossData = scanDataUse^T * scanDataUse$$

where the superscripted T is used to indicate a transpose of a matrix (i.e., in this case, the transpose of scanDataUse is multiplied by scanDataUse).

Step 1005, for each scan in scanDataUse, obtains a centered windowed average (or centered rolling windowed average) of all the scans along the trace associated with each spectral bin. In other words, step 1005 obtains a centered rolling average (to be described later.) Let's call the window length (i.e. the number of scans in the window) the rollingWinSize. In a preferred system the rollingWinSize is about 264 (2 x 132.) The centered rolling windowed average, centered on a given scan number, is the average of all the scanDataUse values in a window from rollingWinSize/2 scans before that scan number to rollingWinSize/2 scans after that scan number.

The centered rolling windowed average gives the localized average values along the traces associated with each spectral bin. This localized average is used, rather than the global average value for each trace, to reflect the fact that the size of the peaks in each trace typically trends downwards from start to finish.

Step 1006, for each scan in scanDataUse, subtracts a fraction of its rolling windowed average (calculated in step 1005) from scanDataUse. This creates scanDataUseMeanShifted, a slightly mean adjusted (shifted) scanData. In a preferred version the small fraction is about 0.0015. In alternative versions, scanDataUseMeanShifted could also be obtained by subtracting the (global) mean of each trace, by taking a fraction of the (global) mean of each trace, etc.

Step 1007 obtains the cross spectral "energy" of this mean shifted data (crossDataMeanShifted) defined as:

$$\text{crossDataMeanShifted} = \text{scanDataUseMeanShifted}^{\text{T}} * \text{scanDataUseMeanShifted}$$

Step 1008 obtains the diagonal vector of crossDataMeanShifted (referred to herein as "crossDataDiagMeanShifted") which contains the effective "energy" in each of the spectral bin traces of scanDataUseMeanShifted.

Step 1009 obtains the smoothed centered second derivative of crossDataDiagMeanShifted and calculates it's negative (referred to herein as"negDerivs2"). Standard mathematical techniques can be used to make sure that these derivatives are centered derivatives (as opposed to forward derivatives or backward derivatives.) The derivatives can also be "smoothed" so that, for instance, three or more points (i.e. bins) would be used to calculate a second order smoothing polynomial used to calculate the second derivatives. This is for a system with 20 spectral bins. Let's refer to the number of points used to calculate the smoothing curve as nPtsToCalcSmoothingCurve. Let's refer to an estimate for the nPtsToCalcSmoothingCurve as nPtsToCalcSmoothingCurveEstimate. Thus, if there are about 40 spectral bins, nPtsToCalcSmoothingCurveEstimate becomes 5.

Step 1010 find peaks in NegDerivs2 by, for example, using a standard peak finding algorithm (e.g. MATLAB's findpeaks). Step 1010 defines the bin locations associated with these peaks to be peakLocs0 and defines the second derivative peak amps associated with these peaks to be peakAmps0. Identifying and processing the peakAmps0/peakLocs0 associated with the peaks in these smoothed centered second derivatives (negDerivs2), as opposed to the peaks in crossDataDiagMeanShifted, allows peaks associated with small/less energetic dyes to become apparent.

In one embodiment, all of the peakLocs0 values can be accepted as the spectral bin locations associated with the peaks in the spectra of the set of dyes (the dye set) associated with this spectral data (scanData.)

However, in the illustrated embodiment, depending on the smoothness of the negDerivs2 data, step 1011 removes some of the values in peakLocs0 and associated values in peakAmps0 if the peakAmps0 value (or the absolute value) is below a threshold value (secondDerivNoiseThresh). In a preferred embodiment, the secondDerivNoiseThresh is given by:

$$\text{secondDerivNoiseThresh} = \max(\text{peakAmps0}) * \text{secondDerivNoiseThreshFraction}$$

where, in a preferred embodiment, secondDerivNoiseThreshFraction is on the order of $1.0e^{-3}$

In a preferred embodiment, the selected set of peakLocs and associated peakAmps is given by the peakLocs0 for which the absolute values of their associated peakAmps0 are greater than or equal to the secondDerivNoiseThresh. Other alternative methods of creating the set of peakAmps and peakLocs can include thresholding based on the values of peakAmps0 (as opposed to the absolute values), the non-zero values of peakAmps0, etc.

Step 1012 then accepts the selected sets of values in peakLocs0 and peakAmps0 and those selected sets are defined herein as peakLocs and peakAmps0. The number of peakLocs/peakAmps in the selected set represents the number of dyes that were found to be in the dye set used to create scanData.

In the illustrated preferred embodiment, a preferred version, step 1013 obtains the un-normalized dye matrix spectra ("unNormalizedDyeMatrixSpectra0") by taking the rows of crossData corresponding to the spectral bins given by peakLocs. In alternate embodiments, the un-normalized dye matrix spectra are obtained by taking the rows of crossDataMeanShifted or some weighted combination of crossDataMean and crossDataMeanShifted is used, instead of crossData.

Step 1014 raises each element of the unNormalizedDyeMatrixSpectra0 to a power between 0.25 and 5 to obtain the unNormalizedDyeMatrixSpectra. In the preferred embodiment, the power is 1, and thus, in the preferred embodiment:

$$unNormalizedDyeMatrixSpectra = unNormalizedDyeMatrixSpectra0$$

The normalized dye matrix spectra ("normalizedDyeMatrixSpectra"), which is simply the dye matrix (DM) (e.g., the IEDM obtained to use as the EDM in step 303 of FIG. 3) is now obtained by normalizing each row in unNormalizedDyeMatrixSpectra by the maximum value in that row. This results in a dye matrix having the typical form where the peak value in each row is 1.

Thus, when an existing dye matrix is not otherwise available, the above method 10000 can be used to estimate one for use as the "EDM", as referenced in the context of step 303 of FIG. 3.

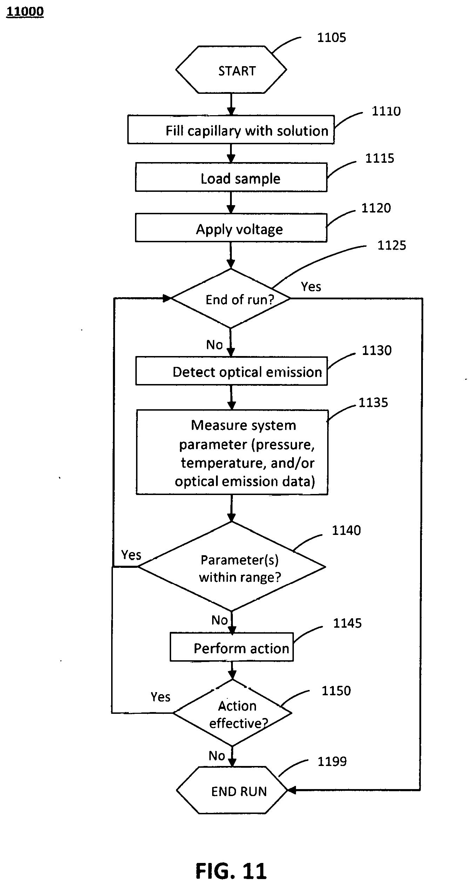

FIG. 11 illustrates a method 11000 for carrying out an embodiment compatible with the present invention. Method 11000 begins at step 1105. Step 1110 fills a capillary (or capillaries) of an instrument with a solution, for example, a polymer solution. Step 1115 loads a sample solution into the capillary (or capillaries) of the instrument. Step 1120 applies a voltage to create a voltage difference between an anode and cathode end of one or more capillaries of the instrument. Step 1125 determines if the sample run has ended. If yes, then the method ends at step 1199. If no, then step 1130 detects optical emission from detection zone 113 while samples are passing through the detection zone 113.

Step 1135 measure one or more system parameters including one or more of a pressure, a temperature, and an optical signal. In some embodiments, a pressure is detected by detecting one or more of a polymer valve position; a polymer valve pressure; a buffer valve position; a buffer valve pressure; a syringe position; and a syringe pressure. In some embodiments, a total force exerted on a syringe actuator (or on other relevant elements) is measured and used to represent a syringe pressure (or the pressure for other relevant elements). Additionally or alternatively, a pressure of a syringe or other relevant elements may be measured more directly, for example, using a pressure transducer, or the like. In some embodiments, a temperature is detected by detecting one or more of a polymer cooler temperature (the polymer cooler is part of the cartridge loader subsystem, not separately shown in FIG. 1); a capillary temperature; an airflow temperature at a capillary outlet; an airflow temperature at a capillary inlet; a heat sink temperature (e.g., part of polymer cooler reference above); a capillary heater temperature; a buffer temperature; a snout temperature (where the snout is a mating element (not shown) used to align the detection zone 113 to detection system 109 of FIG. 1); an instrument temperature; and a laser (or other illumination device) heat sink temperature. In some embodiments, the instrument temperature is taken at various locations within the instrument and then those are analyzed to determine whether any exceed a threshold.

Step 1140 determines if a value of the one or more measured parameters is within an acceptable operating range for obtaining reliable results. In one embodiment, parameter is considered to be not within an acceptable operating range if it is within a pre-determined amount of an off-scale value. For example, if a peak of measured optical signal is within a pre-determined amount of an off scale value (e.g., the upper RFU limit that can be measured by the system), then the result of step 1140 is "no" and the parameter value is considered to not be within an acceptable operating range. If the result of step 1140 is yes, then the method proceeds to step 1125 to determine if the run is ended. If the result of step 1140 is no, then the method proceeds to step 1145 to perform an action based on the measured parameter values. Additionally or alternatively, step 1145 comprises using data obtained in previous cycles of steps 1125 to 1140. Below shows some examples of parameter measurement determinations that can result in the step 1140 determination being "no"

- If, after a set time of a cartridge being in place (e.g., 12 minutes), the temperature of the polymer cooler is more than a threshold amount outside of set point
- "No" conditions for capillary inlet/outlet temperatures of airflow over the cartridge used to control the cartridge temperature:

  o If a temperature at a cartridge inlet not at set desired temp, or within a predefined margin above or below that temp (or, in some embodiments, if a time derivative of that temperature is not at or within a predetermined margin of a set amount)

  o If temperature at cartridge outlet not at set desired temp, or within a predefined margin above or below that temp (or, in some embodiments, if a time derivative of that temperature is not at or within a predetermined margin of a set amount)

  o If a difference between a temperature (or derivative of the temperature) at the inlet and a temperature (or derivative of the temperature) at outlet of the temperature control system is greater than a set amount.

- Normalized capillary heater power outside of a predetermined range
- Supply voltage outside a predetermined range
- Snout heater temperature outside a predetermined range
- Internal ambient temperature outside a predetermined range

Any of the above conditions might further depend on a certain time passage after initial setup (e.g. cartridge placement or other setup condition) for a "no" at step 1140 to result. At step 1145, an action is performed. Examples of actions performed at step 1145 include but are not necessarily limited to: setting or sending a warning or condition flag; sending a warning signal; sending a re-servicing signal; providing a run quality metric (e.g., a green flag, yellow flag, red flag, and/or specific numerical values related to the run); changing a dye matrix component; changing an injection parameter; setting or modifying a post run analysis or correction metric; stopping the process; pausing the process for a predetermined period of time; pausing the process until a condition of the process has changed by a predetermined amount; flushing one or more capillaries; or recording one or more values of the at least two parameters, the values being suitable for correcting or modifying spectrographic data recorded during detecting. Actions might also include setting a process call parameter for calling a subroutine to do any of the preceding actions. Actions might also include, but are not necessarily limited to: sending a check cartridge signal; maintaining the applied pressure; setting a flag; sending a warning signal; sending a service call signal; sending a check cartridge signal; reducing the pressure; increasing the pressure; closing a valve between the container and the pump; checking for leaks; discontinuing transferring the sample solution; or changing a run condition. Actions might also include setting a process call parameter for calling a subroutine to do any of the preceding actions. Examples of changing a run condition include, but are not necessarily limited to, adjusting a time, adjusting a current or voltage, or changing a value in a dye matrix, or changing a temperature.

After the action is performed at step 1145, then step 1150 determines whether the action has been effective. For example, has it been effective enough to continue or resume the run. If no, then step 1199 ends the run. If yes, then processing returns to step 1125. In some cases, an action might simply be a warning, and it will be up to the user to determine whether to end the run. In that case, the warning is simply raised, and, for purposes of the illustrated processing flow, is considered "effective" even if the underlying problem might merit further attention.

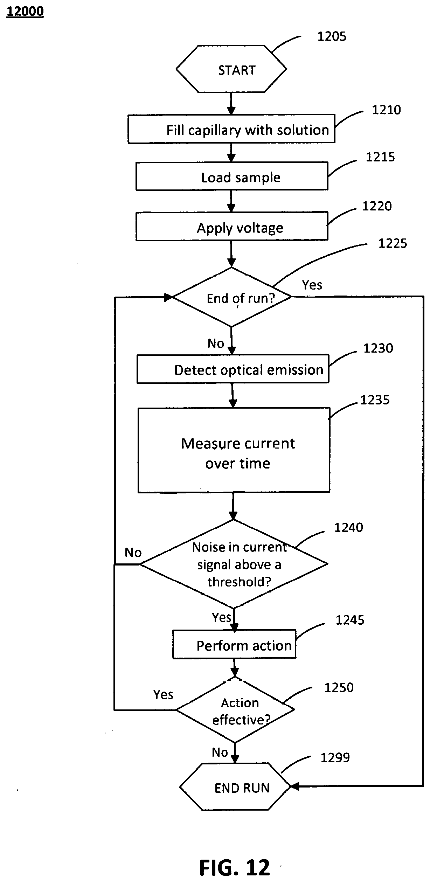

FIG. 12 illustrates a method 12000 for carrying out an embodiment of the present invention. Method 12000 begins at step 1205. Step 1210 fills a capillary (or capillaries) of an instrument with a solution, for example, a polymer solution. Step 1215 loads a sample solution into the capillary (or capillaries) of the instrument. Step 1220 applies a voltage to create a voltage difference between an anode and cathode end of one or more capillaries of the instrument. Step 1225 determines if the sample run has ended. If yes, then the method ends at step 1299. If no, then step 1230 detects optical emission from detection zone 113 while samples are passing through the detection zone 113.

Step 1235 measures current over time. This might be accomplished by detecting a continuous current signal at one or more locations in or across the capillary. This might also be accomplished by detecting a plurality of current values at a plurality of discrete times.

Step 1240 determines whether noise in the current values exceed a predetermined threshold. This can be accomplished by determining a noise metric for the current values. One method for determining such a metric is as follows: determining a best fit smooth line for the current values; determine residuals (distances between the best fit line and each of the plurality of current values); evaluate the range and standard deviation of the residuals against a predetermined value of range threshold and standard deviation threshold. If the range or standard deviation exceed predetermined thresholds, then step 1245 performs a corrective action. If not, then processing returns to step 1225 to determine if it is the end of the run.

After the action is performed at step 1245, then step 1250 determines whether the action has been effective. For example, has it been effective enough to continue or resume the run. If no, then step 1299 ends the run. If yes, then processing returns to step 1225. In some cases, an action might simply be a warning, and it will be up to the user to determine whether to end the run. In that case, the warning is simply raised, and, for purposes of the illustrated processing flow, is considered "effective" even if the underlying problem might merit further attention.

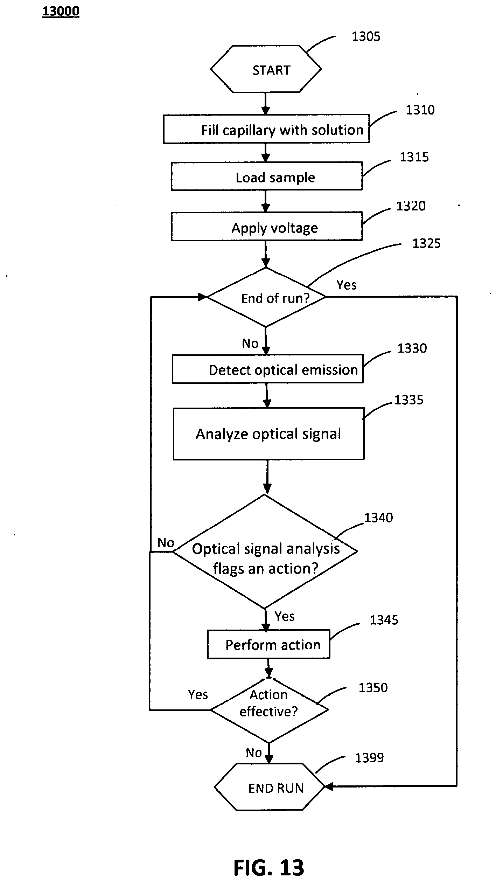

FIG. 13 illustrates a method 13000 for carrying out an embodiment compatible with the present invention. Method 13000 begins at step 1305. Step 1310 fills a capillary (or capillaries) of an instrument with a solution, for example, a polymer solution. Step 1315 loads a sample solution into the capillary (or capillaries) of the instrument. Step 1320 applies a voltage to create a voltage difference between an anode and cathode end of one or more capillaries of the instrument. Step 1325 determines if the sample run has ended. If yes, then the method ends at step 1399. If no, then step 1330 detects optical emission from detection zone 113 while samples are passing through the detection zone 113.

Step 1335 analyzes the optical signal. Step 1340 determines whether analysis of the optical signal flags an action to be taken. For example, the start of true data is identified skipping over primer peaks. Peaks widths are compared against pre-set thresholds. Peak heights are compared against average peak height in a pre-set window. In one embodiment, if the width and height trip pre-set thresholds, across all dyes, flag is thrown. User is advised that spikes have been detected and to contact support if they are frequently encountering spikes, and that this may be caused by contamination in input sample.

In some embodiments, analysis includes, for example, analyzing whether a data points in the signal are off scale or within a predetermined margin of being off scale. If signal values evaluate or exceed the maximum numerical value that the current system can record, then that data point is considered as off scale. If more than a certain number of off-scales are encountered, a flag is triggered, advising users to adjust injection parameters and/or sample concentration.

In other embodiments, signal to noise ratios of the optical signal are analyzed. If the data in the capillary has poor signal to noise, that may be correlated to several issues such as but not limited to injection failure, no sample detected, PCR failure, poor cleanup, low sample concentration and short injection. The signal to noise ratio (SNR) is computed using the median signal level seen in the peak regions of the data seen up to a given point in the experiment, compared to noise estimated from non-peak regions. If the values cross preset thresholds, a flag is generated. User is advised that no valid sample is detected. User is asked to verify sample volume meets a predetermined volume minimum, adjust injection parameters as needed and if failures continue, to contact tech support.

In some embodiments, it is determined whether there is an existing dye matrix, whether a new one, if needed, can be estimated, and whether the spectral data is of sufficient quality to estimate an initial dye matrix, for example using the techniques described above in the context of FIGS. 9-10.

If step 1340 does not indicate an action should be taken, then the method returns to 1325. If the result of step 1340 is yes, then step 1345 takes an action. Examples of actions performed at step 1345 include but arc not necessarily limited to: setting or sending a warning or condition flag; sending a warning signal; sending a re-servicing signal; providing a run quality metric (e.g., a green flag, yellow flag, red flag, and/or specific numerical values related to the run); changing a dye matrix component; changing an injection parameter; setting or modifying a post run analysis or correction metric; stopping the process; pausing the process for a predetermined period of time; pausing the process until a condition of the process has changed by a predetermined amount; flushing one or more capillaries; or recording one or more values of the at least two parameters, the values being suitable for correcting or modifying spectrographic data recorded during detecting. Actions might also include setting a process call parameter for calling a subroutine to do any of the preceding actions. Actions might also include, but are not necessarily limited to: sending a check cartridge signal; maintaining the applied pressure; setting a flag; sending a warning signal; sending a service call signal; sending a check cartridge signal; reducing the pressure; increasing the pressure; closing a valve between the container and the pump; checking for leaks; discontinuing transferring the sample solution; or changing a run condition. Actions might also include setting a process call parameter for calling a subroutine to do any of the preceding actions. Examples of changing a run condition include, but are not necessarily limited to, adjusting a time, adjusting a current or voltage, or changing a value in a dye matrix, or changing a temperature.

After the action is performed at step 1345, then step 1350 determines whether the action has been effective. For example, has it been effective enough to continue or resume the run. If no, then step 1399 ends the run. If yes, then processing returns to step 1325. In some cases, an action might simply be a warning, and it will be up to the user to determine whether to end the run. In that case, the warning is simply raised, and, for purposes of the illustrated processing flow, is considered "effective" even if the underlying problem might merit further attention.

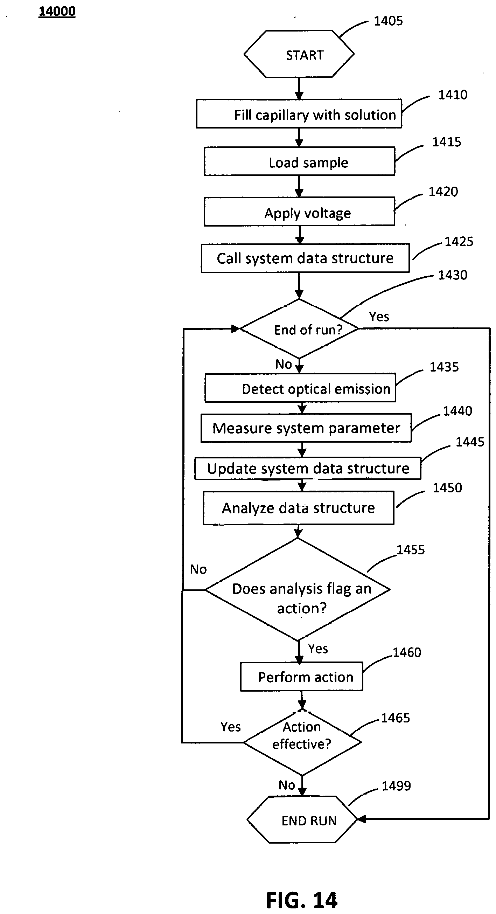

FIG. 14 illustrates a method 14000 for carrying out an embodiment compatible with the present invention. Method 14000 begins at step 1405. Step 1410 fills a capillary (or capillaries) of an instrument with a solution, for example, a polymer solution. Step 1415 loads a sample solution into the capillary (or capillaries) of the instrument. Step 1420 applies a voltage to create a voltage difference between an anode and cathode end of one or more capillaries of the instrument. Step 1425 calls a system data structure. On example of a system data structure is a dye matrix as described in the context of earlier figures.

Step 1430 determines if the sample run has ended. If yes, then the method ends at step 1499. If no, then step 1435 detects optical emission from detection zone 113 while samples are passing through the detection zone 113.

Step 1440 measure one or more system parameters. One example of a system parameter is cross talk between dye spectra in sample dye data. Other examples have been referenced above. Step 1445 updates the system data structure or evaluates the system data structure for possible update. Step 1450 analyzes the data structure or the updated data structure. In one example, the data structure is analyzed by analyzing data generated using the data structure. In one example, data generated using the data structure is dye data corresponding do detected sample and the data structure is a dye matric. Step 1455 determines whether analysis of the system data structure flags an action to be taken.

In some embodiments, it is determined whether there is an existing dye matrix, whether a new one, if needed, can be estimated, and whether the spectral data is of sufficient quality to estimate an initial dye matrix, for example using the techniques described above in the context of FIGS. 9-10.

If step 1455 does not indicate an action should be taken, then the method returns to 1430. If the result of step 1455 is yes, then step 1460 takes an action. Examples of actions performed at step 1460 include but are not necessarily limited to those described in the context of other figures. In one example, an action might include further updating the data structure. In another example, an action might include sending a warning message based on analysis of the system data structure (which might be based on analyzing data produced using the system data structure). Various other actions, as described above, might be taken.

After the action is performed at step 1460, then step 1465 determines whether the action has been effective. For example, has it been effective enough to continue or resume the run. If no, then step 1499 ends the run. If yes, then processing returns to step 1430. In some cases, an action might simply be a warning, and it will be up to the user to determine whether to end the run. In that case, the warning is simply raised, and, for purposes of the illustrated processing flow, is considered "effective" even if the underlying problem might merit further attention.

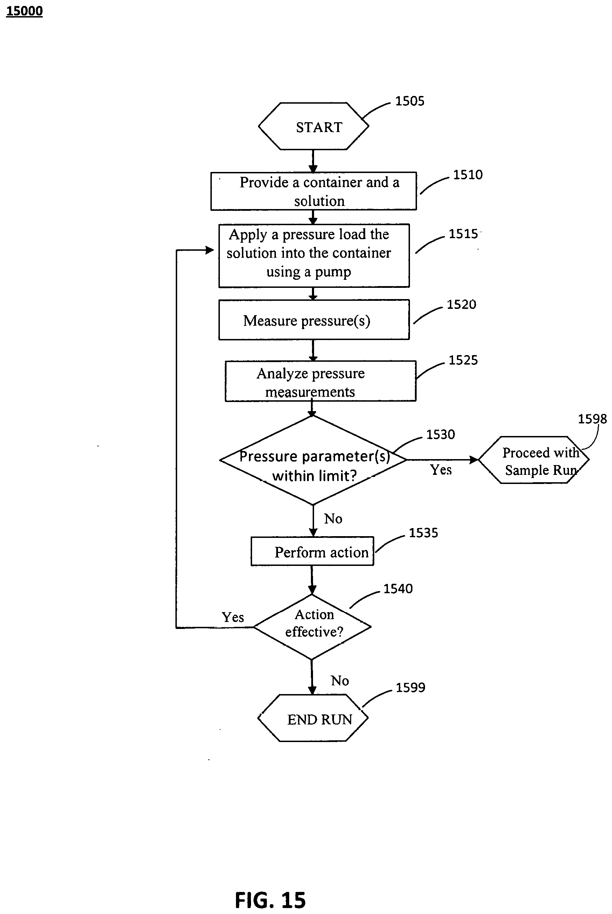

FIG. 15 illustrates a method 15000 for carrying out an embodiment compatible with the present invention. Method 15000 begins at step 1505. Step 1510 provides a container and a solution, for example, a polymer solution. Step 1510 loads the solution into one or more capillaries of the instrument by applying a pressure to the solution in the container. Step 1520 measure one or more pressure values. In some embodiments, a pressure is detected by detecting one or more of a polymer valve position; a polymer valve pressure; a buffer valve position; a buffer valve pressure; a syringe position; and a syringe pressure. In some embodiments, a total force exerted on a syringe actuator(or on other relevant elements) is measured and used to represent a syringe pressure (or the pressure for other relevant elements).

In one embodiment, the one or more pressure values over time. This might be accomplished by detecting a continuous pressure signal. This might also be accomplished by detecting a plurality of pressure values at a plurality of discrete times.

Step 1525 analysis the detected pressure values. In one embodiment, analysis includes determines whether noise in the pressure values exceeds a predetermined threshold. This can be accomplished by determining a noise metric for the pressure values. One method for determining such a metric is as follows: determining a best fit smooth line for the pressure values within a region of interest (e.g., during polymer loading); determine residuals (distances between the best fit line and each of the plurality of current values); and evaluate the residuals against a threshold standard deviation.

In some embodiments, pressure values are analyzed to determine whether they remained above a minimum requirement through the period of interest (e.g., during polymer loading).

If the pressure parameters do not meet requirements (e.g., standard deviation too high and/or pressure below minimum requirement during period of interest) then step 1535 performs a corrective action. If parameter values at step 1535 are acceptable, then step 1598 proceeds with the sample run.

After the action is performed at step 1535, then step 1540 determines whether the action has been effective. For example, has it been effective enough to try again to load solution. If the result of step no, then step 1599 aborts the run. If yes, then, in the illustrated embodiment, processing returns to step 1515 to try again to load the polymer solution. In some cases, an action might simply be a warning, and it will be up to the user to determine whether to end the run. In that case, the warning is simply raised, and, for purposes of the illustrated processing flow, is considered "effective" even if the underlying problem might merit further attention. However, alternative to the illustrated flow, the result of determining that an appropriate warning has been sent might be to continue to step 1598 and proceed with a sample run. The system or user can then evaluate in the context of the pressure analysis or other parameter analysis whether the sample run was of sufficient quality to have provided reliable results.

Systems, apparatus, and methods described herein may be implemented using a computer program product tangibly embodied in an information carrier, e.g., in a non-transitory machine-readable storage device, for execution by a programmable processor; and the method steps described herein, including one or more of the steps of the methods in FIG. 2, FIG. 3, FIG. 8, FIG. 9, FIG. 10, FIG. 11, FIG. 12, FIG. 13, FIG. 14 and/or FIG. 15 may be implemented using one or more computer programs that are executable by such a processor. A computer program is a set of computer program instructions that can be used, directly or indirectly, in a computer to perform a certain activity or bring about a certain result. A computer program can be written in any form of programming language, including compiled or interpreted languages, and it can be deployed in any form, including as a stand-alone program or as a module, component, subroutine, or other unit suitable for use in a computing environment.

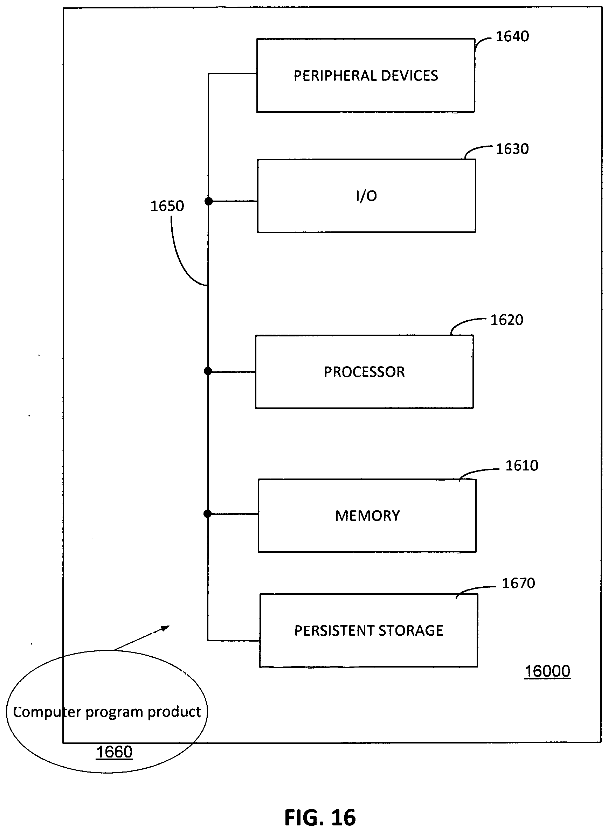

FIG. 16 shows an example of a computer system 16000, one or more of which may provide one or more the components of instrument 1000 of Figure **1,** for example, data processing system 110 (of FIG. 1). Computer system 16000 executes instruction code contained in a computer program product 1660 (which may, for example, be the computer program product 111 of the embodiment of FIG. 1.) Computer program product 1660 comprises executable code in an electronically readable medium that may instruct one or more computers such as computer system 16000 to perform processing that accomplishes the exemplary method steps performed by the embodiments referenced herein. The electronically readable medium may be any non-transitory medium that stores information electronically and may be accessed locally or remotely, for example via a network connection. In alternative embodiments, the medium may be transitory. The medium may include a plurality of geographically dispersed media each configured to store different parts of the executable code at different locations and/or at different times. The executable instruction code in an electronically readable medium directs the illustrated computer system 16000 to carry out various exemplary tasks described herein. The executable code for directing the carrying out of tasks described herein would be typically realized in software. However, it will be appreciated by those skilled in the art, that computers or other electronic devices might utilize code realized in hardware to perform many or all the identified tasks without departing from the present invention. Those skilled in the art will understand that many variations on executable code may be found that implement exemplary methods within the scope of the present invention.

The code or a copy of the code contained in computer program product 9060 may reside in one or more storage persistent media (not separately shown) communicatively coupled to system 9000 for loading and storage in persistent storage device 1670 and/or memory 1610 for execution by processor 1620. Computer system 1600 also includes I/O subsystem 1630 and peripheral devices 1640. I/O subsystem 1630, peripheral devices 1640, processor 1620, memory 1610, and persistent storage device 1670 are coupled via bus 1650. Like persistent storage device 1670 and any other persistent storage that might contain computer program product 1660, memory 1610 is a non-transitory media (even if implemented as a typical volatile computer memory device). Moreover, those skilled in the art will appreciate that in addition to storing computer program product 1660 for carrying out processing described herein, memory 1610 and/or persistent storage device 1670 may be configured to store the various data elements referenced and illustrated herein.

Those skilled in the art will appreciate computer system 16000 illustrates just one example of a system in which a computer program product in accordance with an embodiment of the present invention may be implemented. To cite but one example of an alternative embodiment, execution of instructions contained in a computer program product in accordance with an embodiment of the present invention may be distributed over multiple computers, such as, for example, over the computers of a distributed computing network.

While the present invention has been particularly described with respect to the illustrated embodiments, it will be appreciated that various alterations, modifications and adaptations may be made based on the present disclosure and are intended to be within the scope of the present invention. While the invention has been described in connection with what are presently considered to be the most practical and preferred embodiments, it is to be understood that the present invention is not limited to the disclosed embodiments but, on the contrary, is intended to cover various modifications and equivalent arrangements included within the scope of the underlying principles of the invention as described by the claims that follow.

## Claims

1. A sample analysis method comprising:

   detecting, by a first plurality of sensors, one or more system parameters during polymer loading into a capillary, but prior to sample loading into the capillary and detection;
   detecting, by a second plurality of sensors, one or more system parameters during at least one of sample loading into the capillary and sample detection;
   analyzing, by a computer processor, system parameter data from the first plurality of sensors and the second plurality of sensors to determine, prior to the end of sample detection, whether to perform an action based on the analysis,
   wherein the one or more system parameters comprise one or more of a pressure, a temperature and an optical signal.

2. The method of claim 1, wherein said method is a method for quality control of a process performed on a sample, said method further comprising:

   providing a plurality of capillaries;
   providing a polymer solution source;
   applying (1515) a pressure to the polymer solution source and transferring at least a portion of polymer solution into the capillaries;
   while applying the pressure, measuring (1520) at least one parameter indicative of a sensed value of pressure over time to obtain pressure values;
   performing (1525) an analysis on at least a portion of the pressure values; and
   using the analysis to make a determination (1530) whether a capillary electrophoresis run for a sample should proceed.

3. The method of claim 2 wherein the analysis comprises determining a noise level in a trace representing the pressure values.

4. The method of claim 2 wherein the analysis comprises determining whether the pressure values remained above a threshold value during a time period in which the pressure was applied.

5. The method of claim 2 further comprising:

   providing a sample solution to the plurality of capillaries, the sample solution comprising one or more biological molecules;
   while the sample solution is in the plurality of capillaries, detecting the one or more biological molecules;

while detecting, measuring current in one or more capillaries in which the biological samples are being moved by the current over time to determine a current trace;

performing an analysis on the current trace; and

performing an action based on the analysis.

6. The method of claim 2 wherein measuring pressure over time comprises measuring pressure at a plurality of discrete times.

7. The method of claim 5 wherein measuring current over time comprises measuring current at a plurality of discrete times.

8. The method of claim 5 wherein the analysis comprises determining a noise metric corresponding to signal noise in the current trace and further wherein performing an action based on the analysis comprises performing an action based on a value of the noise metric.

9. The method of any of claims 2 - 8, further comprising:

if the determination is yes, then proceeding with the capillary electrophoresis run (1598);

if the determination is no, then performing (1535) an action and determining whether the action has been effective; and

if the action is determined to be effective (1540), repeating the method from the step of applying a pressure to the polymer solution.

10. The method of claim 9, wherein performing the action comprises one or more of:

maintaining the applied pressure;

setting a flag;

sending a warning signal;

sending a service call signal;

sending a check cartridge signal;

reducing the applied pressure;

increasing the applied pressure;

closing a valve between a reservoir of polymer solution and a pump used to apply the pressure;

discontinuing transferring; or

changing a run condition.

11. A sample analysis system comprising:

a first plurality of sensors to detect one or more system parameters during polymer loading into a capillary, but prior to sample loading into the capillary and detection;

a second plurality of sensors to detect one or more system parameters during at least one of sample loading into the capillary and sample detection;

a processor (1620); and

a memory (1610) coupled to the processor and including computer program instruction for configuring the processor to analyze system parameter data from the first plurality of sensors and the second plurality of sensors to determine, prior to the end of sample detection, whether to perform an action based on the analysis,

wherein the one or more system parameters comprise one or more of a pressure, a temperature and an optical signal.

12. Sample analysis system of claim 11, wherein the processor is adapted to perform a method according to any of claims 2 - 10.

**Patentansprüche**

1. Probenanalyseverfahren, das Folgendes umfasst:

Erfassen eines oder mehrerer Systemparameter durch eine erste Vielzahl von Sensoren während der Polymerbeladung in eine Kapillare, jedoch vor der Probenbeladung in die Kapillare und der Erfassung;

Erfassen von einem oder mehreren Systemparametern durch eine zweite Vielzahl von Sensoren während der Probenladung in die Kapillare und/oder der Probenerfassung;

Analysieren von Systemparameterdaten von der ersten Vielzahl von Sensoren und der zweiten Vielzahl von Sensoren durch einen Computerprozessor, um vor dem Ende der Probenerfassung zu bestimmen, ob basierend auf der Analyse eine Aktion durchgeführt werden soll,

wobei der eine oder die mehreren Systemparameter eines oder mehreres aus einem Druck, einer Temperatur und einem optischen Signal umfassen.

2. Verfahren nach Anspruch 1, wobei das Verfahren ein Verfahren zur Qualitätskontrolle eines an einer Probe durchgeführten Prozesses ist, wobei das Verfahren ferner umfasst:

Bereitstellen einer Vielzahl von Kapillaren;

Bereitstellen einer Polymerlösungsquelle;

Anlegen (1515) eines Drucks an die Polymerlösungsquelle und Übertragen zumindest eines Teils der Polymerlösung in die Kapillaren;

während des Anlegens des Drucks, Messen (1520) mindestens eines Parameters, der einen erfassten Druckwert über die Zeit anzeigt, um Druckwerte zu erhalten;

Durchführen (1525) einer Analyse an mindestens einem Teil der Druckwerte; und

Verwenden der Analyse, um zu bestimmen (1530), ob ein Kapillarelektrophorese-Lauf für eine Probe fortgesetzt werden sollte.

3. Verfahren nach Anspruch 2, wobei die Analyse das Bestimmen eines Rauschpegels in einer Spur umfasst, die die Druckwerte darstellt.

4. Verfahren nach Anspruch 2, wobei die Analyse das Bestimmen umfasst, ob die Druckwerte während eines Zeitraums, in dem der Druck angewendet wurde, über einem Schwellenwert geblieben sind.

5. Verfahren nach Anspruch 2, ferner umfassend:

Bereitstellen einer Probenlösung für die Vielzahl von Kapillaren, wobei die Probenlösung ein oder mehrere biologische Moleküle umfasst;

Erfassen des einen oder der mehreren biologischen Moleküle, während sich die Probenlösung in der Vielzahl von Kapillaren befindet;

während des Erfassens, Messen des Stroms in einer oder mehreren Kapillaren, in denen die biologischen Proben durch den Strom über die Zeit bewegt werden, um eine Stromspur zu bestimmen;

Durchführen einer Analyse an der Stromspur; und

Durchführen einer Aktion basierend auf der Analyse.

6. Verfahren nach Anspruch 2, wobei das Messen des Drucks über die Zeit das Messen des Drucks zu einer Vielzahl von diskreten Zeitpunkten umfasst.

7. Verfahren nach Anspruch 5, wobei das Messen des Stroms über die Zeit das Messen des Stroms zu einer Vielzahl von diskreten Zeitpunkten umfasst.

8. Verfahren nach Anspruch 5, wobei die Analyse das Bestimmen einer Rauschmetrik umfasst, die dem Signalrauschen in der Stromspur entspricht, und wobei ferner das Durchführen einer Aktion basierend auf der Analyse das Durchführen einer Aktion basierend auf einem Wert der Rauschmetrik umfasst.

9. Verfahren nach einem der Ansprüche 2 bis 8, ferner umfassend:

wenn die Bestimmung "ja" ist, dann Fortsetzen des Kapillarelektrophorese-Laufs (1598);

wenn die Bestimmung "nein" ist, dann Ausführen (1535) einer Aktion und Bestimmen, ob die Aktion wirksam war; und

wenn bestimmt wird, dass die Maßnahme wirksam war (1540), Wiederholen des Verfahrens ab dem Schritt des Anlegens eines Drucks an die Polymerlösung.

10. Verfahren nach Anspruch 9, wobei das Durchführen der Aktion eines oder mehreres umfasst von:

Aufrechterhalten des angelegten Drucks;

Setzen einer Markierung;

Senden eines Warnsignals;

Senden eines Serviceanrufsignals;

Senden eines Signals zum Prüfen der Patrone;

Reduzieren des angelegten Drucks;

Erhöhen des angelegten Drucks;

Schließen eines Ventils zwischen einem Reservoir mit Polymerlösung und einer Pumpe, die zum Anlegen des Drucks verwendet wird;

Abbrechen der Übertragung; oder

Ändern einer Laufbedingung.

11. Probenanalysesystem, umfassend:

eine erste Vielzahl von Sensoren zum Erfassen eines oder mehrerer Systemparameter während der Polymerbeladung in eine Kapillare, jedoch vor der Probenbeladung in die Kapillare und der Erfassung;

eine zweite Vielzahl von Sensoren zum Erfassen eines oder mehrerer Systemparameter während mindestens eines von Probenladung in die Kapillare und der Probenerfassung;

einen Prozessor (1620); und

einen Speicher (1610), der mit dem Prozessor verbunden ist und Computerprogrammanweisungen zum Konfigurieren des Prozessors einschließt, um Systemparameterdaten von der ersten Vielzahl von Sensoren und der zweiten Vielzahl von Sensoren zu analysieren, um vor dem Ende der Probenerfassung zu bestimmen, ob basierend auf der Analyse eine Aktion ausgeführt werden soll,

wobei der eine oder die mehreren Systemparameter eines oder mehreres aus einem Druck, einer Temperatur und einem optischen Signal umfassen.

12. Probenanalysesystem nach Anspruch 11, wobei der Prozessor dazu geeignet ist, ein Verfahren gemäß einem der Ansprüche 2 bis 10 auszuführen.

**Revendications**

1. Procédé d'analyse d'un échantillon comprenant :

la détection, par une première pluralité de capteurs, d'un ou plusieurs paramètres de système pendant le chargement de polymère dans un capillaire, mais avant le chargement d'échantillon dans le capillaire et la détection ;

la détection, par une seconde pluralité de capteurs, d'un ou plusieurs paramètres de système pendant au moins l'un du chargement d'échantillon dans le capillaire et de la détection d'échantillon ;

l'analyse, par un processeur informatique, de données de paramètres de système provenant de la première pluralité de capteurs et de la seconde pluralité de capteurs, pour déterminer, avant la fin de la détection d'échantillon, s'il convient de réaliser une action en fonction de l'analyse,

dans lequel les un ou plusieurs paramètres de système comprennent un ou plusieurs d'une pression, d'une température et d'un signal optique.

2. Procédé selon la revendication 1, dans lequel ledit procédé est un procédé de contrôle de qualité d'un processus réalisé sur un échantillon, ledit procédé comprenant en outre :

la fourniture d'une pluralité de capillaires ;

la fourniture d'une source de solution de polymère ;

l'application (1515) d'une pression à la source de solution de polymère et le transfert d'au moins une partie de la solution de polymère dans les capillaires ;

tout en appliquant la pression, la mesure (1520) d'au moins un paramètre indiquant une valeur de pression détectée dans le temps afin d'obtenir des valeurs de pression ;

la réalisation (1525) d'une analyse sur au moins une partie des valeurs de pression ; et

l'utilisation de l'analyse pour effectuer une détermination (1530) établissant si un cycle d'électrophorèse capillaire doit être effectué pour un échantillon.

3. Procédé selon la revendication 2, dans lequel l'analyse comprend la détermination d'un niveau de bruit dans une trace représentant les valeurs de pression.

4. Procédé selon la revendication 2, dans lequel l'analyse comprend la détermination établissant si les valeurs de pression sont restées supérieures à une valeur seuil pendant une période de temps au cours de laquelle la pression a été appliquée.

5. Procédé selon la revendication 2, comprenant en outre :

la fourniture d'une solution d'échantillon à la pluralité de capillaires, la solution d'échantillon comprenant une ou plusieurs molécules biologiques ;
pendant que la solution d'échantillon se trouve dans la pluralité de capillaires, la détection des une ou plusieurs molécules biologiques ;
tout en détectant, la mesure du courant dans un ou plusieurs capillaires dans lesquels les échantillons biologiques sont déplacés par le courant dans le temps pour déterminer une trace de courant ;
la réalisation d'une analyse sur la trace de courant ; et
la réalisation d'une action en fonction de l'analyse.

6. Procédé selon la revendication 2, dans lequel la mesure de la pression dans le temps comprend la mesure de pression à une pluralité de temps distincts.

7. Procédé selon la revendication 5, dans lequel la mesure de courant dans le temps comprend la mesure de courant à une pluralité de temps distincts.

8. Procédé selon la revendication 5, dans lequel l'analyse comprend la détermination d'une métrique de bruit correspondant au bruit de signal dans la trace de courant, et dans lequel en outre la réalisation d'une action en fonction de l'analyse comprend la réalisation d'une action en fonction d'une valeur de la métrique de bruit.

9. Procédé selon l'une quelconque des revendications 2 à 8, comprenant en outre :

si la détermination est positive, alors le fait d'effectuer le cycle d'électrophorèse capillaire (1598) ;
si la détermination est négative, alors la réalisation (1535) d'une action et la détermination établissant si l'action a été efficace ; et
si l'action est déterminée efficace (1540), la répétition du procédé à partir de l'étape d'application d'une pression à la solution de polymère.

10. Procédé selon la revendication 9, dans lequel la réalisation de l'action comprend un ou plusieurs de :

maintien de la pression appliquée ;
définition d'un drapeau ;
envoi d'un signal d'alarme ;
envoi d'un signal d'appel de service ;
envoi d'un signal de vérification de cartouche ;
réduction de la pression appliquée ;
augmentation de la pression appliquée ;
fermeture d'une soupape entre un réservoir de solution de polymère et une pompe utilisée pour appliquer la pression ;
arrêt du transfert ; ou
modification d'une condition d'exécution.

11. Système d'analyse d'échantillon comprenant :

une première pluralité de capteurs pour détecter un ou plusieurs paramètres de système pendant le chargement de polymère dans un capillaire, mais avant le chargement d'échantillon dans le capillaire et la détection ;
une seconde pluralité de capteurs pour détecter un ou plusieurs paramètres de système pendant au moins l'un du chargement d'échantillon dans le capillaire et de la détection d'échantillon ;
un processeur (1620) ; et
une mémoire (1610) couplée au processeur et comportant une instruction de programme d'ordinateur pour configurer le processeur afin qu'il analyse les données de paramètres de système provenant de la première pluralité de capteurs et de la seconde pluralité de capteurs pour déterminer, avant la fin de la détection d'échantillon, s'il faut réaliser une action en fonction de l'analyse,

dans lequel les un ou plusieurs paramètres de système comprennent un ou plusieurs d'une pression, d'une température et d'un signal optique.

12. Système d'analyse d'échantillon selon la revendication 11, dans lequel le processeur est adapté pour réaliser un procédé selon l'une quelconque des revendications 2 à 10.

FIG. 1

START  201

Perform first runtime processing to use first dye data obtained from dye-labeled samples to determine spectral error correction values                    202

Perform additional runtime processing to apply a correction function that uses the spectral error correction values (or the additional spectral error correction values after a first iteration) to obtain corrected dye data                    203

Analyze corrected dye data to determine spectral error in corrected dye data relative to first dye data and relative to applicable criteria for spectral error reduction.                    204

Perform additional runtime processing that uses the corrected dye data to obtain additional spectral error correction values                    206

no

Error sufficiently reduced?                    205

yes

END  207

**FIG. 2**                    2000

START  301

END  319

Existing Dye Matrix (EDM) available from prior calibration?  302

no → Obtain an internally estimated dye matrix (IEDM) from runtime spectral data and use it as the existing dye matrix (EDM)  303

yes

During runtime, use the EDM to convert spectral data to existing dye data  304

Determine an existing crosstalk matrix from the existing dye data by, for each possible pair of dyes, plotting the fluorescence of one dye against the other, removing outliers, and then determining the slope of a regression line for the data plot.  305

Determine a DQ value for the existing crosstalk matrix as the maximum cross talk (regression line slope) for any two-dye combination  306

Apply the existing crosstalk matrix to the EDM to determine a candidate optimized dye matrix (CODM)  307

Apply a crosstalk matrix to the current CODM to obtain a next CODM  315

Use the CODM (or next CODM) to convert spectral bin data to candidate dye data  308

Using the candidate dye data, determine an enhanced DQ value (eDQ) for the CODM (or next CODM) as the maximum cross talk (regression line slope from cross plot data) for any two-dye combination plus a selected fraction of the corresponding standard deviation  309

Is eDQ of current CODM lower than eDQ of prior CODM?  310

yes → Discard prior CODM and keep current CODM as best candidate optimized dye matrix (BCODM)  311

no

Keep prior CODM as potential best candidate optimized dye matrix (BCODM) and go to step 314  312

Predetermined maximum iterations completed?  314

no → (to 315)

yes

Enhanced DQ of BCODM within predetermined performance characteristics?  313

no

yes

eDQ of BCODM less than DQ of EDM?  316

yes → Replace EDM with BCODM  317

no → Do not replace EDM with BCODM  318

**FIG. 3**

3000

**FIG. 4**

EP 3 583 413 B1

FIG. 5

FIG. 6

FIG. 7

FIG. 8

9000

```
                    ┌─────────────────┐
                    │  START    901   │
                    └────────┬────────┘
                             │
                             ▼
      ┌──────────────────────────────────────────┐
      │ Pre-process spectral scan data to remove  │
      │ spikes, primer peaks, reptation peaks, and│
      │ other artifacts                    902    │
      └──────────────────────┬───────────────────┘
                             │
                             ▼
      ┌──────────────────────────────────────────┐
      │ Use the spectral scan data to determine   │
      │ proxy data for the "energy" in each spectra│
      │ bin associated with the spectral scan data │
      │                                    903    │
      └──────────────────────┬───────────────────┘
                             │
                             ▼
      ┌──────────────────────────────────────────┐
      │ Process the energy proxy data via peak /  │
      │ spectra analysis to identify the number of│
      │ active dyes                        904    │
      └──────────────────────┬───────────────────┘
                             │
                             ▼
      ┌──────────────────────────────────────────┐
      │ Determine initial guess for approximate   │
      │ spectra for each active dye identified    │
      │                                    905    │
      └──────────────────────┬───────────────────┘
                             │
                             ▼
      ┌──────────────────────────────────────────┐
      │ Determine the approximate spectra for each│
      │ active dye by re-scaling each spectral bin│
      │ of the initial guess               906    │
      └──────────────────────┬───────────────────┘
                             │
                             ▼
      ┌──────────────────────────────────────────┐
      │ Determine the normalized dye matrix       │
      │ spectra by normalizing each approximate   │
      │ dye spectrum so that each has a maximum   │
      │ value of 1                         907    │
      └──────────────────────┬───────────────────┘
                             │
                             ▼
      ┌──────────────────────────────────────────┐
      │ Form estimated dye matrix using the       │
      │ normalized dye matrix spectra for each row│
      │                                    908    │
      └──────────────────────┬───────────────────┘
                             │
                             ▼
                    ┌─────────────────┐
                    │  END    909     │
                    └─────────────────┘
```

FIG. 9

**10000**

START **1001**

Pre-process spectral scan data ("scanData") to remove spikes, primer peaks, reptation peaks, and other artifacts to obtain a matrix of pre-processed spectral scanData ("scanDataUse") **1002**

Obtain cross spectral data "energy" matrix ("crossData"):
crossData = scanDataUse$^T$ * scanDataUse **1003**

At each scan in scanDataUse, obtain a centered windowed average of all the scans in a window along the trace associated with each spectral bin. **1005**

At each scan in scanDataUse, subtract a fraction of its centered windowed average from scanDataUse ("scanDataUseMeanShifted") **1006**

Obtain cross spectral data "energy" matrix of meanshifted scan data **1007** ("crossDataMeanShifted"):

crossDataMeanShifted = scanDataUseMeanShifted$^T$ * scanDataUseMeanShifted

Obtain diagonal of crossDataMeanShifted ("crossDataDiagMeanShifted") **1008**

Obtain smoothed centered second derivative of crossDataDiagMeanShifted and calculate the negative of it ("negDerivs2") **1009**

END **1016**

Obtain normalized dye matrix spectra ("NormalizedDyeMatrixSpectra") by normalizing each row in unNormalizedDyeMatrixSpectra to the maxim value in that row. Result is DM, the internally estimate dye matrix.
DM = NormalizedDyeMatrixSpectra **1015**

Raise unNormalizedDyeMatrixSpectra0 to a selected power between 0.25 and 5, preferably 1, to obtain the un-normalized dye matrix spectra ("unNormalizedDyeMatrixSpectra") **1014**

Obtain preliminary un-normalized dye matrix spectra ("unNormalizedDyeMatrixSpectra0") by taking the rows of crossData associated with each bin in peakLocs **1013**

Accept selected set of peakLocs0 and peakAmps0 as peakLocs and peakAmps **1012**

If necessary, remove selected bins from peakLocs0 and remove their associated peaks from peakAmps0 if their associated peaks are less than a threshold value ("secondDerivNoiseThresh") **1011**

Find peaks in negDerivs2 and define bins associated with those peaks as peakLocs0 and define second derivative of those peaks to be peakAmps0, the amplitude of the peaks at peakLocs0 **1010**

**FIG. 10**

**11000**

**FIG. 11**

12000

FIG. 12

FIG. 13

14000

START — 1405

Fill capillary with solution — 1410

Load sample — 1415

Apply voltage — 1420

Call system data structure — 1425

End of run? — 1430
Yes

No

Detect optical emission — 1435

Measure system parameter — 1440

Update system data structure — 1445

Analyze data structure — 1450

Does analysis flag an action? — 1455
No

Yes

Perform action — 1460

Action effective? — 1465
Yes

No

END RUN — 1499

FIG. 14

15000

FIG. 15

FIG. 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 62460700
- US 62463551
- US 12401314
- US 12412914
- US 12416814
- US 59144517
- US 59186517
- US 59186717
- US 62463528
- US 62463467
- US 2006070880 A
- EP 1898210 A
- WO 0023796 A
- US 2008110756 A

### Non-patent literature cited in the description

- **A. C. HARVEY**. A comparison of Preliminary Estimators for Robust Regression. J. OF THE AMERICAN STATISTICAL ASSOCIATION, 1977, vol. 72, 910-913
- **NICOLA MASTRONARDIA** ; **DIANNE P. O'LEARY**. Fast robust regression algorithms for problems with Toeplitz structure. *COMPUTATIONAL STATISTICS & DATA ANALYSIS*, 2007, vol. 52, 1119-1131